# EUROPEAN PATENT SPECIFICATION

(11) **EP 2 855 575 B1**
(45) Date of publication and mention of the grant of the patent: **07.03.2018**
(21) Application number: 13734189.7
(22) Date of filing: 24.05.2013
(51) Int. Cl.: C08K 5/5399, C08K 7/02, C08K 7/14, C08L 69/00

(54) **FLAME RETARDANT POLYCARBONATE COMPOSITIONS, METHODS OF MANUFACTURE THEREOF AND ARTICLES COMPRISING THE SAME**
FLAMMHEMMENDE POLYCARBONATZUSAMMENSETZUNGEN, VERFAHREN ZUR HERSTELLUNG DAVON UND ARTIKEL DAMIT
COMPOSITIONS DE POLYCARBONATE IGNIFUGES, LEURS PROCÉDÉS DE PRÉPARATION ET OBJETS LES COMPRENANT

(30) Priority: 24.05.2012 US 201261651487 P; 24.05.2012 US 201261651481 P
(43) Date of publication of application: 08.04.2015
(73) Proprietor: SABIC Global Technologies B.V., 4612 PX Bergen op Zoom (NL)
(72) Inventor: ZHENG, Yun, Pudong Shanghai 201203 (CN); CHENG, Yunan, Pudong Shanghai 201203 (CN); SONG, Shijie, Pudong Shanghai 201203 (CN)
(74) Representative: Chevalier, Renaud Philippe
(86) International application number: PCT/IB2013/054306
(87) International publication number: WO 2013/175445

(56) References cited:
- WO-A1-2013/115151
- US-A1- 2007 149 661
- US-A1- 2010 129 649
- US-A1- 2010 152 344
- US-B1- 8 058 333
- DATABASE WPI Week 200340 Thomson Scientific, London, GB; AN 2003-427670 XP002713951, & KR 2003 0008811 A (CHEIL IND INC) 29 January 2003 (2003-01-29)
- DATABASE WPI Week 200732 Thomson Scientific, London, GB; AN 2007-336264 XP002713952, & JP 2007 045906 A (SUMITOMO DOW LTD) 22 February 2007 (2007-02-22)

## Description

### BACKGROUND

This disclosure relates to flame retardant polycarbonate compositions, methods of manufacture thereof and to articles comprising the same.

In electronic and electrical devices such as notebook personal computers, e-books, and tablet personal computers, metallic body panels are being replaced by materials that are lighter in weight and offer a robust combination of mechanical properties. These lighter materials result in weight savings, cost savings and enable the manufacture of complex designs. While these lighter materials can be used to manufacture panels having thinner cross-sectional thicknesses, it is desirable to improve the stiffness of the material to prevent warping. It is also desirable to improve the flame retardancy of the material to reduce fire related hazards.

The application KR 10-2003-0008811A discloses a flame retardant polycarbonate composition comprising 70 to 99 weight percent of polycarbonate resin, 5 to 15 weight percent of glass fiber, and a phosphazene compound.

### SUMMARY

Disclosed herein is a flame retardant polycarbonate composition comprising 10 to 90 weight percent of a polycarbonate composition that comprises a polycarbonate and a polyester having repeat units derived from sebacic acid and bisphenol A; 5 to 60 weight percent of a reinforcing filler; where the reinforcing filler is a glass fiber, a carbon fiber, a metal fiber, or a combination comprising at least one of the foregoing reinforcing fillers; a phosphazene compound; and a flame retardant synergist, where the flame retardant synergist is a mineral filler, where the mineral filler is talc, calcium carbonate, dolomite, wollastonite, barium sulfate, silica, kaolin, feldspar, or a combination comprising at least one of the foregoing mineral fillers.

Disclosed herein too is a method comprising blending 10 to 90 weight percent of a polycarbonate composition that comprises repeat units derived from sebacic acid and bisphenol A; 5 to 60 weight percent of a reinforcing filler; where the reinforcing filler is a glass fiber, a carbon fiber, a metal fiber, or a combination comprising at least one of the foregoing reinforcing fillers; and a flame retardant composition that comprises a phosphazene compound and a flame retardant synergist, where the flame retardant synergist is a mineral filler, where the mineral filler is talc, calcium carbonate, dolomite, wollastonite, barium sulfate, silica, kaolin, feldspar, or a combination comprising at least one of the foregoing mineral fillers; where the flame retardant composition is effective to deliver to the flame retardant polycarbonate composition a probability of a first time pass of 0.10 to 0.199 per unit weight of the flame retardant composition at a sample thickness of at least 1.2 millimeters when tested as per the UL-94 protocol; extruding the flame retardant composition; and optionally molding the composition.

### DETAILED DESCRIPTION

Disclosed herein is a flame retardant polycarbonate composition that displays a suitable combination of stiffness and ductility as well as a low melt viscosity that renders it easily processable. The flame retardant polycarbonate composition comprises a polycarbonate composition and a flame retardant composition that comprises a phosphazene compound and a flame retardant synergist. The flame retardant polycarbonate composition displays an advantageous combination of properties that renders it useful in electronics goods such as notebook personal computers, e-books, tablet personal computers, and the like.

Disclosed herein too is a method of manufacturing a flame retardant polycarbonate composition. The method comprises mixing a polycarbonate composition and a flame retardant composition that comprises a phosphazene compound and a flame retardant synergist to produce the flame retardant polycarbonate composition.

In one embodiment, the polycarbonate composition comprises a first copolyestercarbonate copolymer, a second copolyestercarbonate copolymer and a polycarbonate homopolymer. In another embodiment, the polycarbonate composition may comprise a first copolyestercarbonate copolymer and a second copolyestercarbonate copolymer. In yet another embodiment, the polycarbonate composition comprises a polycarbonate homopolymer, a first copolyestercarbonate copolymer, a second copolyestercarbonate copolymer, and a polysiloxane-polycarbonate copolymer. The polycarbonate homopolymer may be a linear polymer, a branched polymer, or a combination of a linear and a branched polycarbonate.

The first copolyestercarbonate copolymer comprises a copolymer of a polyester and a polycarbonate. In one embodiment, the first copolyestercarbonate copolymer comprises a sebacic acid polyester and a bisphenol A polycarbonate. The second copolyestercarbonate copolymer comprises a polyester that is also derived from sebacic acid and a polycarbonate, but that has a higher molecular weight that the first copolyestercarbonate copolymer. In one embodiment, the second copolyestercarbonate copolymer is endcapped with para-cumylphenol (PCP). These will be discussed in detail later.

In another embodiment, the polycarbonate composition comprises a polycarbonate homopolymer and a polysiloxane-polycarbonate copolymer. The polycarbonate homopolymer may be a linear polycarbonate, a branched polycarbonate, or a combination of a linear polycarbonate and a branched polycarbonate.

The term "polycarbonate composition", "polycarbonate" and "polycarbonate resin" mean compositions having repeating structural carbonate units of the formula (1): 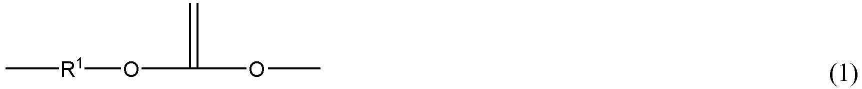 wherein at least 60 percent of the total number of R¹ groups may contain aromatic organic groups and the balance thereof are aliphatic or alicyclic, or aromatic groups. R¹ in the carbonate units of formula (1) may be a C₆-C₃₆ aromatic group wherein at least one moiety is aromatic. Each R¹ may be an aromatic organic group, for example, a group of the formula (2):

-A¹-Y¹-A²- (2)

wherein each of the A¹ and A² is a monocyclic divalent aryl group and Y¹ is a bridging group having one or two atoms that separate A¹ and A². For example, one atom may separate A¹ from A², with illustrative examples of these groups including -O-, -S-, -S(O)-, -S(O)₂)-, -C(O)-, methylene, cyclohexyl-methylene, 2-[2.2.1]-bicycloheptylidene, ethylidene, isopropylidene, neopentylidene, cyclohexylidene, cyclopentadecyclidene, cyclododecylidene, and adamantylidene. The bridging group of Y¹ may be a hydrocarbon group or a saturated hydrocarbon group such as methylene, cyclohexlylidene, or isopropylidene.

The polycarbonates may be produced from dihydroxy compounds having the formula HO-R¹-OH, wherein R¹ is defined as above for formula (1). The formula HO-R¹-OH includes bisphenol compounds of the formula (3):

HO-A¹-Y¹-A²-OH (3)

wherein Y¹, A¹, and A² are as described above. For example, one atom may separate A¹ and A². Each R¹ may include bisphenol compounds of the general formula (4): 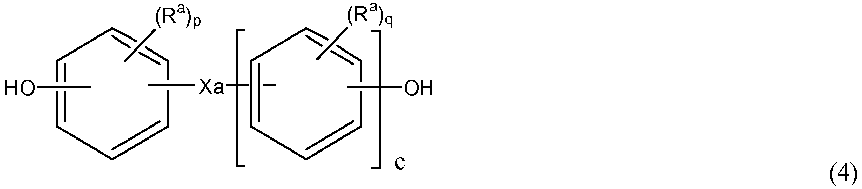 where Xₐ is a bridging group connecting the two hydroxy-substituted aromatic groups, where the bridging group and the hydroxy substituent of each C₆ arylene group are disposed ortho, meta, or para (specifically para) to each other on the C₆ arylene group. For example, the bridging group Xₐ may be single bond, --O--, --S--, --C(O)--, or a C₁₋₁₈ organic group. The C₁₋₁₈ organic bridging group may be cyclic or acyclic, aromatic or non-aromatic, and can further comprise heteroatoms such as halogens, oxygen, nitrogen, sulfur, silicon, or phosphorous. The C₁₋₁₈ organic group can be disposed such that the C₆ arylene groups connected thereto are each connected to a common alkylidene carbon or to different carbons of the C₁₋₁₈ organic bridging group. R^{a} and R^{b} may each represent a halogen, C₁₋₁₂ alkyl group, or a combination thereof. For example, R^{a} and R^{b} may each be a C₁₋₃ alkyl group, specifically methyl, disposed meta to the hydroxy group on each arylene group. The designation (e) is 0 or 1. The numbers p and q are each independently integers of 0 to 4. It will be understood that R^{a} is hydrogen when p is 0, and likewise R^{b} is hydrogen when q is 0.

Xₐ may be substituted or unsubstituted C₃₋₁₈ cycloalkylidene, a C₁₋₂₅ alkylidene of formula --C(R^{c})(R^{d})-- wherein R^{c} and R^{d} are each independently hydrogen, C₁₋₁₂ alkyl, C₁₋₁₂ cycloalkyl, C₇₋₁₂ arylalkyl, C₁₋₁₂ heteroalkyl, or cyclic C₇₋₁₂ heteroarylalkyl, or a group of the formula --C(=R^{e})-- wherein R^{e} is a divalent C₁₋₁₂ hydrocarbon group. This may include methylene, cyclohexylmethylene, ethylidene, neopentylidene, isopropylidene, 2-[2.2.1]-bicycloheptylidene, cyclohexylidene, cyclopentylidene, cyclododecylidene, and adamantylidene. A specific example wherein Xₐ is a substituted cycloalkylidene is the cyclohexylidene-bridged, alkyl-substituted bisphenol of formula (5): 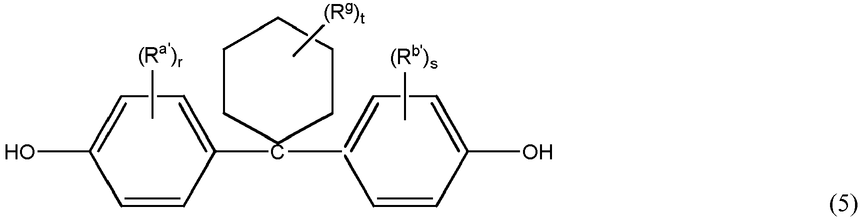 wherein R^{a'} and R^{b'} are each independently C₁₋₁₂ alkyl, R^{g} is C₁₋₁₂ alkyl or halogen, r and s are each independently 1 to 4, and t is 0 to 10. R^{a'} and R^{b'} may be disposed meta to the cyclohexylidene bridging group. The substituents R^{a'}, R^{b'} and R^{g} may, when comprising an appropriate number of carbon atoms, be straight chain, cyclic, bicyclic, branched, saturated, or unsaturated. For example, R^{g} may be each independently C₁₋₄ alkyl, R^{g} is C₁₋₄ alkyl, r and s are each 1, and t is 0 to 5. In another example, R^{a'}, R^{b'} and R^{g} may each be methyl, r and s are each 1, and t is 0 or 3. The cyclohexylidene-bridged bisphenol can be the reaction product of two moles of o-cresol with one mole of cyclohexanone. In another example, the cyclohexylidene-bridged bisphenol may be the reaction product of two moles of a cresol with one mole of a hydrogenated isophorone (e.g., 1,1,3-trimethyl-3-cyclohexane-5-one). Such cyclohexane-containing bisphenols, for example the reaction product of two moles of a phenol with one mole of a hydrogenated isophorone, are useful for making polycarbonate polymers with high glass transition temperatures and high heat distortion temperatures. Cyclohexyl bisphenol-containing polycarbonates, or a combination comprising at least one of the foregoing with other bisphenol polycarbonates, are supplied by Bayer Co. under the APEC® trade name.

In one embodiment, Xₐ is a C₁₋₁₈ alkylene group, a C₃₋₁₈ cycloalkylene group, a fused C₆₋₁₈ cycloalkylene group, or a group of the formula --B₁-W-B₂-- wherein B₁ and B₂ are the same or different C₁₋₆alkylene group and W is a C₃₋₁₂ cycloalkylidene group or a C₆₋₁₆ arylene group.

In another example, Xₐ may be a substituted C₃₋₁₈ cycloalkylidene of the formula (6): 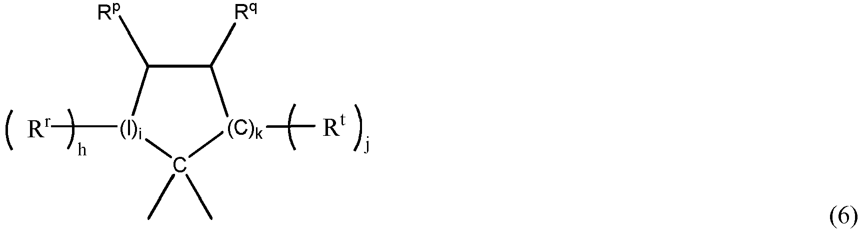 wherein R^{r}, R^{p}, R^{q}, and R^{t} are independently hydrogen, halogen, oxygen, or C₁₋₁₂ organic groups; I is a direct bond, a carbon, or a divalent oxygen, sulfur, or -N(Z)- where Z is hydrogen, halogen, hydroxy, C₁₋₁₂ alkyl, C₁₋₁₂ alkoxy, C₆₋₁₂ aryl, or C₁₋₁₂ acyl; h is 0 to 2, j is 1 or 2, i is an integer of 0 or 1, and k is an integer of 0 to 3, with the proviso that at least two of R^{r}, R^{p}, R^{q} and R^{t} taken together are a fused cycloaliphatic, aromatic, or heteroaromatic ring. It will be understood that where the fused ring is aromatic, the ring as shown in formula (5) will have an unsaturated carbon-carbon linkage at the junction where the ring is fused. When i is 0, h is 0, and k is 1, the ring as shown in formula (5) contains 4 carbon atoms; when i is 0, h is 0, and k is 2, the ring as shown contains 5 carbon atoms, and when i is 0, h is 0, and k is 3, the ring contains 6 carbon atoms. In one example, two adjacent groups (e.g., R^{q} and R^{t} taken together) form an aromatic group, and in another embodiment, R^{q} and R^{t} taken together form one aromatic group and R^{r} and R^{p} taken together form a second aromatic group. When R^{q} and R^{t} taken together form an aromatic group, R^{p} can be a double-bonded oxygen atom, *i.e.,* a ketone.

Other useful dihydroxy compounds having the formula HO-R¹-OH include aromatic dihydroxy compounds of formula (7): 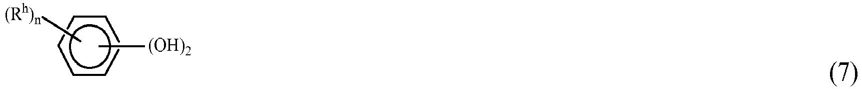 wherein each R^{h} is independently a halogen atom, a C₁₋₁₀ hydrocarbyl such as a C₁₋₁₀ alkyl group, a halogen substituted C₁₋₁₀ hydrocarbyl such as a halogen-substituted C₁₋₁₀ alkyl group, and n is 0 to 4. The halogen is usually bromine.

Bisphenol-type dihydroxy aromatic compounds may include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis(hydroxyphenyl)cyclopentane, 1,1-bis(4-hydroxyphenyl)cyclohexane, 1,1-bis(4-hydroxy-3 methyl phenyl)cyclohexane 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantine, (alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorene, 2,7-dihydroxypyrene, 6,6'-dihydroxy-3,3,3',3'-tetramethylspiro(bis)indane ("spirobiindane bisphenol"), 3,3-bis(4-hydroxyphenyl)phthalide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, and the like, as well as a combination comprising at least one of the foregoing dihydroxy aromatic compounds.

Examples of the types of bisphenol compounds represented by formula (3) may include 1,1-bis(4-hydroxyphenyl)methane, 1,1-bis(4-hydroxyphenyl)ethane, 2,2-bis(4-hydroxyphenyl)propane (hereinafter "bisphenol A" or "BPA"), 2,2-bis(4-hydroxyphenyl)butane, 2,2-bis(4-hydroxyphenyl)octane, 1,1-bis(4-hydroxyphenyl)propane, 1,1-bis(4-hydroxyphenyl)n-butane, 2,2-bis(4-hydroxy-1-methylphenyl)propane, 1,1-bis(4-hydroxy-t-butylphenyl)propane, 3,3-bis(4-hydroxyphenyl)phthalimidine, 2-phenyl-3,3-bis(4-hydroxyphenyl)phthalimidine ("PBPP"), 9,9-bis(4-hydroxyphenyl)fluorene, and 1,1-bis(4-hydroxy-3-methylphenyl)cyclohexane ("DMBPC"). Combinations comprising at least one of the foregoing dihydroxy aromatic compounds can also be used.

The dihydroxy compounds of formula (3) may exist in the form of the following formula (8): 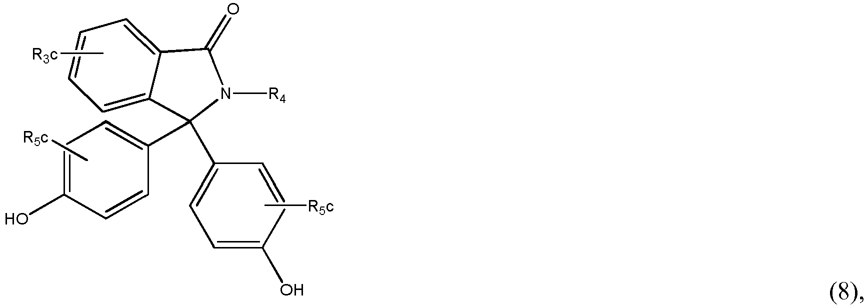 wherein R₃ and R₅ are each independently a halogen or a C₁₋₆ alkyl group, R₄ is a C₁₋₆ alkyl, phenyl, or phenyl substituted with up to five halogens or C₁₋₆ alkyl groups, and c is 0 to 4. In a specific embodiment, R₄ is a C₁₋₆ alkyl or phenyl group. In still another embodiment, R₄ is a methyl or phenyl group. In another specific embodiment, each c is 0.

The dihydroxy compounds of formula (3) may be the following formula (9): 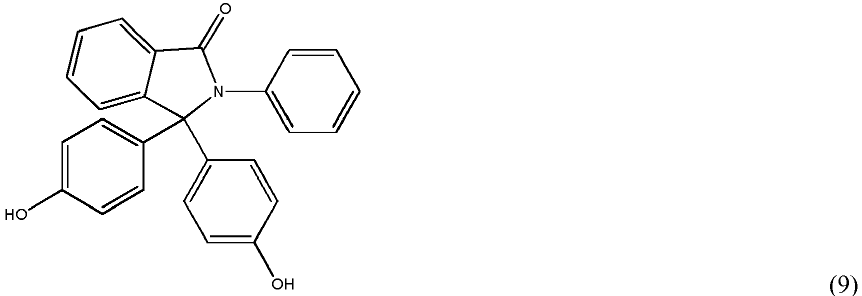 (also known as 3,3-bis(4-hydroxyphenyl)-2-phenylisoindolin-1-one (PPPBP)).

Alternatively, the dihydroxy compounds of formula (3) may have the following formula (10): 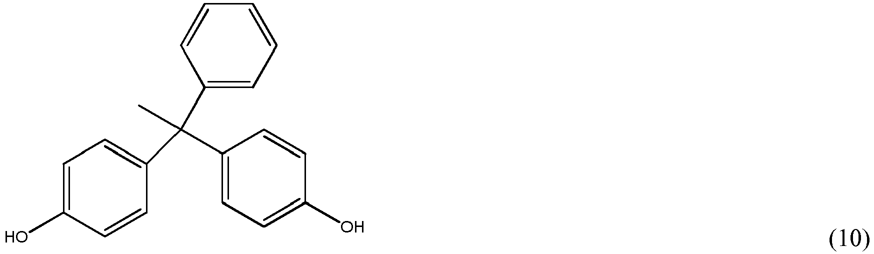 (also known as 4,4'-(1-phenylethane-1,1-diyl)diphenol (bisphenol AP) or 1,1-bis(4-hydroxyphenyl)-1-phenyl-ethane).

Alternatively, the dihydroxy compounds of formula (3) may have the following formula (11): 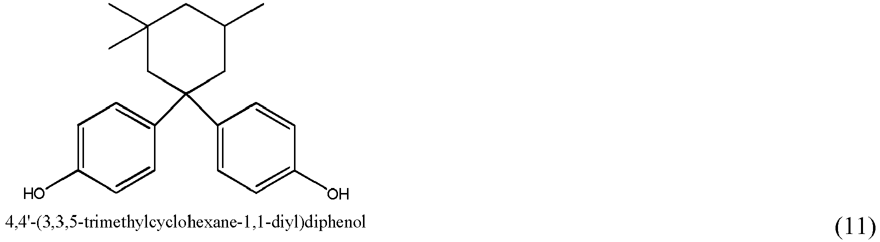 (bisphenol TMC) or 1,1-bis(4-hydroxyphenyl)-3,3,5-trimethylcyclohexane).

Exemplary copolymers containing polycarbonate units may be derived from bisphenol A.

As noted above, the first copolymer and the second copolymer each comprise a polyester. A specific type of copolymer may be a polyestercarbonate, also known as a polyester-polycarbonate. As used herein, these terms (i.e., the polyestercarbonate and the polyester-polycarbonate) are synonymous. Such copolymers further contain, in addition to recurring carbonate chain units of the formula (1) as described above, repeating ester units of formula (12): 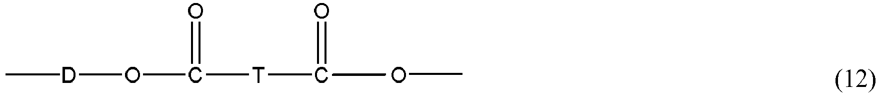 wherein O-D-O is a divalent group derived from a dihydroxy compound, and D may be, for example, one or more alkyl containing C₆-C₂₀ aromatic group(s), or one or more C₆-C₂₀ aromatic group(s), a C₂₋₁₀ alkylene group, a C₆₋₂₀ alicyclic group, a C₆₋₂₀ aromatic group or a polyoxyalkylene group in which the alkylene groups contain 2 to 6 carbon atoms, specifically 2, 3, or 4 carbon atoms. D may be a C₂₋₃₀ alkylene group having a straight chain, branched chain, or cyclic (including polycyclic) structure. O-D-O may be derived from an aromatic dihydroxy compound of formula (3) above. O-D-O may be derived from an aromatic dihydroxy compound of formula (4) above. O-D-O may be derived from an aromatic dihydroxy compound of formula (7) above.

The molar ratio of ester units to carbonate units in the copolymers may vary broadly, for example 1:99 to 99:1, specifically 10:90 to 90:10, and more specifically 25:75 to 75:25, depending on the desired properties of the final composition.

T of formula (12) may be a divalent group derived from a dicarboxylic acid, and may be, for example, a C₂₋₁₀ alkylene group, a C₆₋₂₀ alicyclic group, a C₆₋₂₀ alkyl aromatic group, a C₆₋₂₀ aromatic group, or a C₆ to C₃₆ divalent organic group derived from a dihydroxy compound or chemical equivalent thereof. In one embodiment, T is an aliphatic group. T may be derived from a C₆-C₂₀ linear aliphatic alpha-omega (αΩ) dicarboxylic ester.

Diacids from which the T group in the ester unit of formula (12) is derived include aliphatic dicarboxylic acid from 6 to 36 carbon atoms, optionally from 6 to 20 carbon atoms. The C₆-C₂₀ linear aliphatic alpha-omega (αΩ) dicarboxylic esters may be derived from adipic acid, sebacic acid, 3,3-dimethyl adipic acid, 3,3,6-trimethyl sebacic acid, 3,3,5,5-tetramethyl sebacic acid, azelaic acid, dodecanedioic acid, dimer acids, cyclohexane dicarboxylic acids, dimethyl cyclohexane dicarboxylic acid, norbornane dicarboxylic acids, adamantane dicarboxylic acids, cyclohexene dicarboxylic acids, C₁₄, C₁₈ and C₂₀ diacids.

Saturated aliphatic alpha-omega dicarboxylic acids may be adipic acid, sebacic acid or dodecanedioic acid. In an exemplary embodiment, sebacic acid is a dicarboxylic acid having the following formula (13): 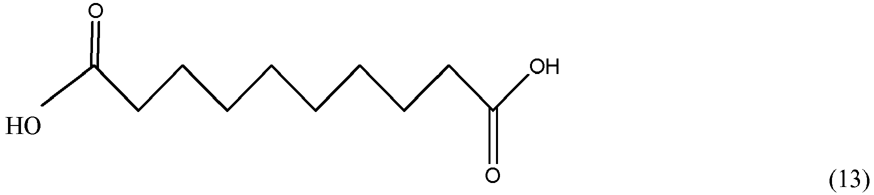 Sebacic acid has a molecular mass of 202.25 g/mol, a density of 1.209 g/cm³ (25°C), and a melting point of 294.4°C at 100 mm Hg. Sebacic acid may be derived from castor oil.

Other examples of aromatic dicarboxylic acids that may be used to prepare the polyester units include isophthalic or terephthalic acid, 1,2-di(p-carboxyphenyl)ethane, 4,4'-dicarboxydiphenyl ether, 4,4'-bisbenzoic acid, and combinations comprising at least one of the foregoing acids. Acids containing fused rings can also be present, such as in 1,4-, 1,5-, or 2,6-naphthalenedicarboxylic acids. Specific dicarboxylic acids may be terephthalic acid, isophthalic acid, naphthalene dicarboxylic acid, cyclohexane dicarboxylic acid, sebacic acid or combinations thereof.

Mixtures of the diacids can also be employed. It should be noted that although referred to as diacids, any ester precursor could be employed such as acid halides, specifically acid chlorides, and diaromatic esters of the diacid such as diphenyl, for example, the diphenylester of sebacic acid. The diacid carbon atom number does not include any carbon atoms which may be included in the ester precursor portion, for example diphenyl. It may be desirable that at least four, five or six carbon bonds separate the acid groups. This may reduce the formation of undesirable and unwanted cyclic species. The aromatic dicarboxylic acids may be used in combination with the saturated aliphatic alpha-omega dicarboxylic acids to yield the polyester. In an exemplary embodiment, isophthalic acid or terephthalic acid may be used in combination with the sebacic acid to produce the polyester.

Overall, D of the polyester-polycarbonate may be a C₂₋₉ alkylene group and T is p-phenylene, m-phenylene, naphthalene, a divalent cycloaliphatic group, or a combination thereof. This class of polyester includes the poly(alkylene terephthalates).

The polyester-polycarbonate may have a bio-content (i.e., a sebacic acid content) according to ASTM-D-6866 of 2 weight percent (wt%) to 65 wt%, based on the total weight of the polycarbonate composition. In one embodiment, the polyester-polycarbonate may have a bio-content according to ASTM-D-6866 of at least 2 wt%, 3 wt%, 4 wt%, 5 wt%, 6 wt%, 7 wt%, 8 wt%, 9 wt%, 10 wt%, 11 wt%, 12 wt%, 13 wt%, 14 wt%, 15 wt%, 16 wt%, 17 wt%, 18 wt%, 19 wt%, 20 wt%, 25 wt%, 30 wt%, 35 wt%, 40 wt%, 45 wt%, 50 wt%, 55 wt%, 60 wt% or 65 wt% of the composition derived therefrom. The polyester-polycarbonate may have a bio-content according to ASTM-D-6866 of at least 5 wt% of the polycarbonate composition. In other words, the polycarbonate composition may have at least 5 wt% of sebacic acid.

As noted above, two polycarbonate copolymers may be used in the flame retardant polycarbonate composition. The first copolyestercarbonate copolymer comprises a polyester derived from sebacic acid that is copolymerized with a polycarbonate. The first polycarbonate polymer is endcapped with phenol or t-butyl-phenol. The second copolyestercarbonate copolymer also comprises a polyester derived from sebacic acid that is copolymerized with a polycarbonate. The second copolyestercarbonate copolymer is endcapped with paracumyl phenol (PCP). The first polycarbonate has a lower molecular weight than the second copolyestercarbonate copolymer.

The first copolyestercarbonate copolymer has a weight average molecular weight of 15,000 to 28,000 Daltons, specifically 17,000 to 25,500 Daltons, specifically 19,000 to 23,000 Daltons, and more specifically 20,000 to 22,000 Daltons as measured by gel permeation chromatography using a polycarbonate standard. The first copolyestercarbonate copolymer may comprise 3.0 mole% to 8.0 mole%, specifically 4.0 mole% to 7.5 mole%, and more specifically 5.0 mole% to 6.5 mole% of the polyester derived from sebacic acid.

The first copolyestercarbonate copolymer is used in amounts of 10 to 60 wt%, specifically 15 to 46 wt%, specifically 20 to 43 wt%, and more specifically 23 to 40 wt%, based on the total weight of the flame retardant polycarbonate composition.

In one embodiment, the second copolyestercarbonate copolymer is endcapped with paracumyl phenol and has a weight average molecular weight of 30,000 to 45,000 Daltons, specifically 32,000 to 40,000 Daltons, specifically 34,000 to 39,000 Daltons, more specifically 35,000 to 38,000 Daltons as measured by gel permeation chromatography using a polycarbonate standard. The second copolyestercarbonate copolymer may comprise 7 mole% to 12 mole%, specifically 7.5 mole% to 10 mole%, and more specifically 8.0 mole% to 9.0 mole% of polyester derived from sebacic acid.

The second copolyestercarbonate copolymer is used in amounts of 10 to 35 wt%, specifically 12 to 32 wt%, specifically 15 to 30wt%, specifically 18 to 28 wt%, and more specifically 20 to 37 wt%, based on the total weight of the flame retardant polycarbonate composition.

Overall, the first and the second copolyestercarbonate copolymers may contain 1 to 15 wt%, specifically 2 to 12 wt%, specifically 3 to 10 wt%, specifically 4 to 9 wt%, and more specifically 5 to 8 wt% of the polyester derived from sebacic acid. The polyester-polycarbonate copolymer may comprise 1.0 wt%, 2.0 wt%, 3.0 wt%, 4.0 wt%, 5.0 wt%, 6.0 wt%, 7.0 wt%, 8.0 wt%, 9.0 wt%, 10.0 wt%, 11.0 wt%, 12.0 wt%, 13.0 wt%, 14.0 wt%, and 15.0 wt% of a polyester derived from sebacic acid.

In one form, the first and second copolyestercarbonate copolymers are polyester-polycarbonate copolymers where the polyester is derived by reacting by reacting sebacic acid with bisphenol A and where the polycarbonate is obtained from the reaction of bisphenol A with phosgene. The first and second copolyestercarbonate copolymers containing the polyester-polycarbonate copolymer has the following formula (14):

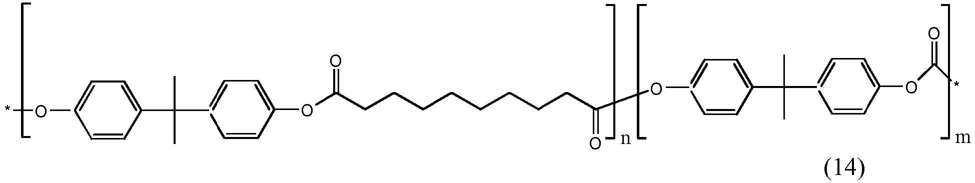

Formula (14) may be designed to be a high flow ductile (HFD) polyester-polycarbonate copolymer (HFD). The high flow ductile copolymer has a low molecular (LM) weight polyester derived from sebacic acid. The polyester derived from sebacic acid in the high flow ductile copolymer is present in an amount of 6.0 mole% to 8.5 mole%. In one embodiment, the polyester derived from sebacic acid has a weight average molecular weight of 21, 000 to 36,500 Daltons. In an exemplary embodiment, the high flow ductile polyester-polycarbonate copolymer may have a weight average molecular weight average of 21,500 Daltons as measured by gel permeation chromatography using a polycarbonate standard. It is desirable for the high flow ductile polyester-polycarbonate copolymer to contain 6.0 mole% derived from sebacic acid.

The first and the second copolyestercarbonate copolymer which comprises the polyester-polycarbonate copolymers beneficially have a low level of carboxylic anhydride groups. Anhydride groups are where two aliphatic diacids, or chemical equivalents, react to form an anhydride linkage. The amount of carboxylic acid groups bound in such anhydride linkages should be less than or equal to 10 mole% of the total amount of carboxylic acid content in the copolymer. In other embodiments, the anhydride content should be less than or equal to 5 mole% of carboxylic acid content in the copolymer, and in yet other embodiments, the carboxylic acid content in the copolymer should be less than or equal to 2 mole%.

Low levels of anhydride groups can be achieved by conducting an interfacial polymerization reaction of the dicarboxylic acid, bisphenol and phosgene initially at a low pH (4 to 6) to get a high incorporation of the diacid in the polymer, and then after a proportion of the monomer has been incorporated into the growing polymer chain, switching to a high pH (10 to 11) to convert any anhydride groups into ester linkages. Anhydride linkages can be determined by numerous methods such as, for instance proton NMR analyses showing signal for the hydrogens adjacent to the carbonyl group. In an embodiment, the first and the second copolyestercarbonate copolymer have a low amount of anhydride linkages, such as, for example, less than or equal to 5 mole%, specifically less than or equal to 3 mole%, and more specifically less than or equal to 2 mole%, as determined by proton NMR analysis. Low amounts of anhydride linkages in the polyester-polycarbonate copolymer contributes to superior melt stability in the copolymer, as well as other desirable properties.

Polycarbonates may be manufactured by processes such as interfacial polymerization and melt polymerization. Copolycarbonates having a high glass transition temperature are generally manufactured using interfacial polymerization. Although the reaction conditions for interfacial polymerization can vary, an exemplary process generally involves dissolving or dispersing a dihydric phenol reactant in aqueous caustic soda or potash, adding the resulting mixture to a water-immiscible solvent medium, and contacting the reactants with a carbonate precursor in the presence of a catalyst such as, for example, a tertiary amine or a phase transfer catalyst, under controlled pH conditions, e.g., 8 to 10. The most commonly used water immiscible solvents include methylene chloride, 1,2-dichloroethane, chlorobenzene, toluene, and the like.

Exemplary carbonate precursors may include, for example, a carbonyl halide such as carbonyl bromide or carbonyl chloride, or a haloformate such as a bishaloformates of a dihydric phenol (e.g., the bischloroformates of bisphenol A, hydroquinone, or the like) or a glycol (e.g., the bishaloformate of ethylene glycol, neopentyl glycol, polyethylene glycol, or the like). Combinations comprising at least one of the foregoing types of carbonate precursors can also be used. For example, an interfacial polymerization reaction to form carbonate linkages uses phosgene as a carbonate precursor, and is referred to as a phosgenation reaction.

Among tertiary amines that can be used are aliphatic tertiary amines such as triethylamine, tributylamine, cycloaliphatic amines such as N,N-diethyl-cyclohexylamine and aromatic tertiary amines such as N,N-dimethylaniline.

Among the phase transfer catalysts that can be used are catalysts of the formula (R³)₄Q⁺X, wherein each R³ is the same or different, and is a C₁₋₁₀ alkyl group; Q is a nitrogen or phosphorus atom; and X is a halogen atom or a C₁₋₈ alkoxy group or C₆₋₁₈ aryloxy group. Exemplary phase transfer catalysts include, for example, [CH₃(CH₂)₃]₄NX, [CH₃(CH₂)₃]₄PX, [CH₃(CH₂)₅]₄NX, [CH₃(CH₂)₆]₄NX, [CH₃(CH₂)₄]₄NX, CH₃[CH₃(CH₂)₃]₃NX, and CH₃[CH₃(CH₂)₂]₃NX, wherein X is Cl⁻, Br⁻, a C₁₋₈ alkoxy group or a C₆₋₁₈ aryloxy group. An effective amount of a phase transfer catalyst can be 0.1 to 10 wt % based on the weight of bisphenol in the phosgenation mixture. For example, an effective amount of phase transfer catalyst can be 0.5 to 2 wt % based on the weight of bisphenol in the phosgenation mixture.

The polycarbonate may be prepared by a melt polymerization process. Generally, in the melt polymerization process, polycarbonates are prepared by co-reacting, in a molten state, the dihydroxy reactant(s) (i.e. aliphatic diol and/or aliphatic diacid, and any additional dihydroxy compound) and a diaryl carbonate ester, such as diphenyl carbonate, or more specifically in an embodiment, an activated carbonate such as bis(methyl salicyl) carbonate, in the presence of a transesterification catalyst. The reaction may be carried out in typical polymerization equipment, such as one or more continuously stirred reactors (CSTR's), plug flow reactors, wire wetting fall polymerizers, free fall polymerizers, wiped film polymerizers, BANBURY® mixers, single or twin screw extruders, or combinations of the foregoing. Volatile monohydric phenol is removed from the molten reactants by distillation and the polymer is isolated as a molten residue. A specifically useful melt process for making polycarbonates uses a diaryl carbonate ester having electron-withdrawing substituents on the aryls. Examples of specifically useful diaryl carbonate esters with electron withdrawing substituents include bis(4-nitrophenyl)carbonate, bis(2-chlorophenyl)carbonate, bis(4-chlorophenyl)carbonate, bis(methyl salicyl)carbonate, bis(4-methylcarboxylphenyl)carbonate, bis(2-acetylphenyl)carboxylate, bis(4-acetylphenyl)carboxylate, or a combination comprising at least one of the foregoing.

All types of polycarbonate end groups are contemplated as being useful in the high and low glass transition temperature polycarbonates, provided that such end groups do not significantly adversely affect desired properties of the compositions. An end-capping agent (also referred to as a chain-stopper) can be used to limit molecular weight growth rate, and so control molecular weight of the first and/or second polycarbonate. Exemplary chain-stoppers include certain monophenolic compounds (i.e., phenyl compounds having a single free hydroxy group), monocarboxylic acid chlorides, and/or monochloroformates. Phenolic chain-stoppers are exemplified by phenol and C₁-C₂₂ alkyl-substituted phenols such as para-cumyl-phenol, resorcinol monobenzoate, and p- and tertiary-butyl phenol, cresol, and monoethers of diphenols, such as p-methoxyphenol. Alkyl-substituted phenols with branched chain alkyl substituents having 8 to 9 carbon atoms can be specifically mentioned. In one embodiment, at least one of the copolymers is endcapped with para-cumyl phenol (PCP).

Endgroups can be derived from the carbonyl source (i.e., the diaryl carbonate), from selection of monomer ratios, incomplete polymerization, chain scission, and the like, as well as any added end-capping groups, and can include derivatizable functional groups such as hydroxy groups, carboxylic acid groups, or the like. In an embodiment, the endgroup of a polycarbonate can comprise a structural unit derived from a diaryl carbonate, where the structural unit can be an endgroup. In a further embodiment, the endgroup is derived from an activated carbonate. Such endgroups can derive from the transesterification reaction of the alkyl ester of an appropriately substituted activated carbonate, with a hydroxy group at the end of a polycarbonate polymer chain, under conditions in which the hydroxy group reacts with the ester carbonyl from the activated carbonate, instead of with the carbonate carbonyl of the activated carbonate. In this way, structural units derived from ester containing compounds or substructures derived from the activated carbonate and present in the melt polymerization reaction can form ester endgroups. In an embodiment, the ester endgroup derived from a salicylic ester can be a residue of BMSC or other substituted or unsubstituted bis(alkyl salicyl) carbonate such as bis(ethyl salicyl) carbonate, bis(propyl salicyl) carbonate, bis(phenyl salicyl) carbonate, bis(benzyl salicyl) carbonate, or the like. In a specific embodiment, where BMSC is used as the activated carbonyl source, the endgroup is derived from and is a residue of BMSC, and is an ester endgroup derived from a salicylic acid ester, having the structure of formula (15):

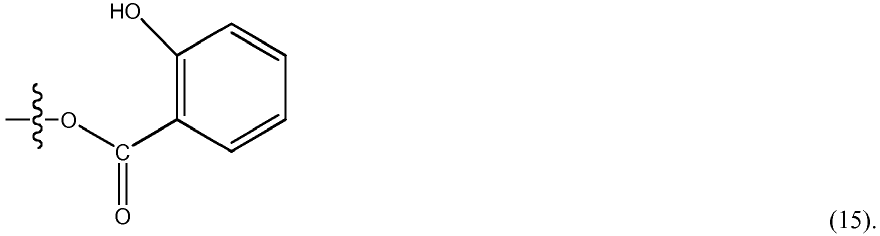

The reactants for the polymerization reaction using an activated aromatic carbonate can be charged into a reactor either in the solid form or in the molten form. Initial charging of reactants into a reactor and subsequent mixing of these materials under reactive conditions for polymerization may be conducted in an inert gas atmosphere such as a nitrogen atmosphere. The charging of one or more reactant may also be done at a later stage of the polymerization reaction. Mixing of the reaction mixture is accomplished by stirring or other forms of agitation. Reactive conditions include time, temperature, pressure and other factors that affect polymerization of the reactants. In one embodiment, the activated aromatic carbonate is added at a mole ratio of 0.8 to 1.3, and more specifically 0.9 to 1.3, and all sub-ranges there between, relative to the total moles of monomer unit compounds. In a specific embodiment, the molar ratio of activated aromatic carbonate to monomer unit compounds is 1.013 to 1.29, specifically 1.015 to 1.028. In another specific embodiment, the activated aromatic carbonate is BMSC.

Polycarbonates with branching groups are also contemplated as being useful, provided that such branching does not significantly adversely affect desired properties of the polycarbonate. Branched polycarbonates can be prepared by adding a branching agent during polymerization. These branching agents include polyfunctional organic compounds containing at least three functional groups selected from hydroxyl, carboxyl, carboxylic anhydride, haloformyl, and mixtures of the foregoing functional groups. Specific examples include trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl)alpha, alpha-dimethyl benzyl)phenol), 4-chloroformyl phthalic anhydride, trimesic acid, and benzophenone tetracarboxylic acid. The branching agents can be added at a level of 0.05 to 2.0 wt %. Mixtures comprising linear polycarbonates and branched polycarbonates can be used.

For highly branched polycarbonate, the branched polycarbonate can comprise greater than or equal to 3 mol% branching agent, specifically, greater than or equal to 4 mol% branching agent. Exemplary branching agents, as described above, include 1,1,1-tris(4-hydroxyphenyl)ethane (THPE), 1,3,5-tris(4-hydroxyphenyl)benzene, tris(4-hydroxyphenyl)methane, 1,1,2-tris(4-hydroxyphenyl)propane, 1,3,5-trihydroxybenzene, m-terphenyltriol, trisphenol PA, 1,3,5-tris((4-hydroxyphenyl)isopropyl)benzene, and 1,1,1-tris(3-methyl-4-hydroxyphenyl)ethane, 1,3,5-trihydroxybenzene, m-terphenyltriol, trimellitic trichloride (TMTC), as well as combinations comprising at least one of the foregoing. In some embodiments, the branching agent is trimellitic trichloride (TMTC) or 1,1,1-tris(hydroxyphenyl)ethane (THPE).

The branched polycarbonate may be endcapped with end-capping agents, p-cyanophenol (termed "HBN" in Table 6 below), phenol and p-t-butylphenol.

When a branched polycarbonate is used, it is used in amounts of 5 to 90 wt%, specifically 10 to 25wt% and more specifically 12 to 20 wt%, based on the total weight of the flame retardant polycarbonate composition. Linear polycarbonates are generally used in amounts of 10 to 90 wt%, specifically 20 to 60 wt%, and more specifically 25 to 55 wt%, based on the total weight of the flame retardant polycarbonate composition.

The polycarbonate composition is used in amounts of 10 to 90 wt%, specifically 20 to 80 wt%, specifically 30 to 70 wt%, and more specifically 40 to 60 wt%, based on the total weight of the flame retardant polycarbonate composition.

The flame retardant polycarbonate composition further comprises a polysiloxane-polycarbonate copolymer, also referred to as a polysiloxane-polycarbonate. The polydiorganosiloxane (also referred to herein as "polysiloxane") blocks of the copolymer comprise repeating diorganosiloxane units as in formula (16) 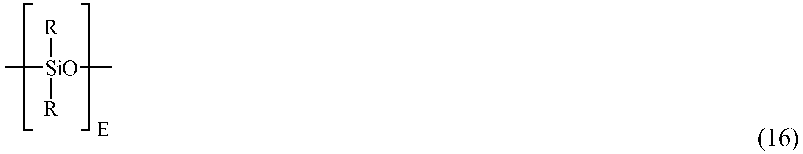 wherein each R is independently a C₁₋₁₃ monovalent organic group. For example, R can be a C₁-C₁₃ alkyl, C₁-C₁₃ alkoxy, C₂-C₁₃ alkenyl group, C₂-C₁₃ alkenyloxy, C₃-C₆ cycloalkyl, C₃-C₆ cycloalkoxy, C₆-C₁₄ aryl, C₆-C₁₀ aryloxy, C₇-C₁₃ arylalkyl, C₇-C₁₃ aralkoxy, C₇-C₁₃ alkylaryl, or C₇-C₁₃ alkylaryloxy. The foregoing groups can be fully or partially halogenated with fluorine, chlorine, bromine, or iodine, or a combination thereof. Combinations of the foregoing R groups can be used in the same copolymer.

The value of E in formula (16) can vary widely depending on the type and relative amount of each component in the flame retardant composition, the desired properties of the composition, and like considerations. Generally, E has an average value of 2 to 1,000, specifically 3 to 500, more specifically 5 to 100. In one embodiment, E has an average value of 10 to 75, and in still another embodiment, E has an average value of 40 to 60. Where E is of a lower value, e.g., less than 40, it can be desirable to use a relatively larger amount of the polycarbonate-polysiloxane copolymer. Conversely, where E is of a higher value, e.g., greater than 40, a relatively lower amount of the polycarbonate-polysiloxane copolymer can be used.

A combination of a first and a second (or more) polycarbonate-polysiloxane copolymers can be used, wherein the average value of E of the first copolymer is less than the average value of E of the second copolymer.

In one embodiment, the polysiloxane blocks are of formula (17) 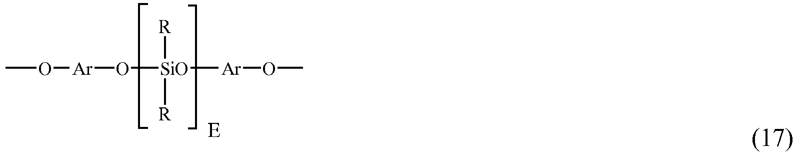 wherein E is as defined above; each R can be the same or different, and is as defined above; and Ar can be the same or different, and is a substituted or unsubstituted C₆-C₃₀ arylene group, wherein the bonds are directly connected to an aromatic moiety. Ar groups in formula (17) can be derived from a C₆-C₃₀ dihydroxyarylene compound, for example a dihydroxyarylene compound of formula (3) or (6) above. Exemplary dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane. Combinations comprising at least one of the foregoing dihydroxy compounds can also be used.

In another embodiment, polysiloxane blocks are of formula (18) 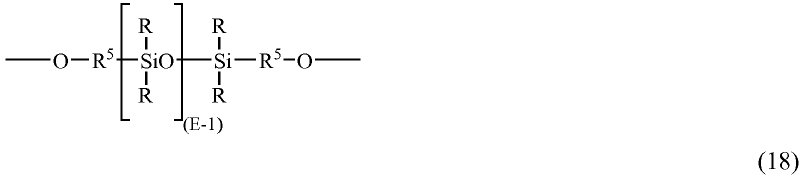 wherein R and E are as described above, and each R⁵ is independently a divalent C₁-C₃₀ organic group, and wherein the polymerized polysiloxane unit is the reaction residue of its corresponding dihydroxy compound. In a specific embodiment, the polysiloxane blocks are of formula (19): 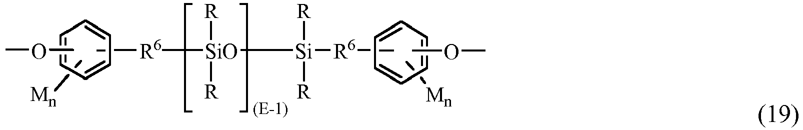 wherein R and E are as defined above. R⁶ in formula (14) is a divalent C₂-C₈ aliphatic group. Each M in formula (19) can be the same or different, and can be a halogen, cyano, nitro, C₁-C₈ alkylthio, C₁-C₈ alkyl, C₁-C₈ alkoxy, C₂-C₈ alkenyl, C₂-C₈ alkenyloxy group, C₃-C₈ cycloalkyl, C₃-C₈ cycloalkoxy, C₆-C₁₀ aryl, C₆-C₁₀ aryloxy, C₇-C₁₂ aralkyl, C₇-C₁₂ aralkoxy, C₇-C₁₂ alkylaryl, or C₇-C₁₂ alkylaryloxy, wherein each n is independently 0, 1, 2, 3, or 4.

In one embodiment, M is bromo or chloro, an alkyl group such as methyl, ethyl, or propyl, an alkoxy group such as methoxy, ethoxy, or propoxy, or an aryl group such as phenyl, chlorophenyl, or tolyl; R² is a dimethylene, trimethylene or tetramethylene group; and R is a C₁₋₈ alkyl, haloalkyl such as trifluoropropyl, cyanoalkyl, or aryl such as phenyl, chlorophenyl or tolyl. In another embodiment, R is methyl, or a combination of methyl and trifluoropropyl, or a combination of methyl and phenyl. In still another embodiment, M is methoxy, n is one, R² is a divalent C₁-C₃ aliphatic group, and R is methyl.

Blocks of formula (18) can be derived from the corresponding dihydroxy polysiloxane (20) 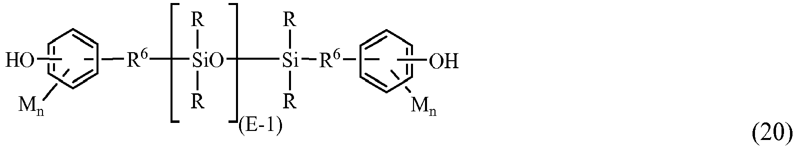 wherein R, E, M, R⁶, and n are as described above. Such dihydroxy polysiloxanes can be made by effecting a platinum-catalyzed addition between a siloxane hydride of formula (21) 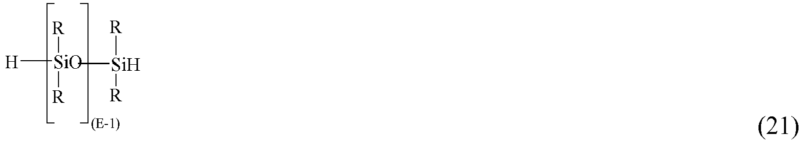 wherein R and E are as previously defined, and an aliphatically unsaturated monohydric phenol. Exemplary aliphatically unsaturated monohydric phenols include eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. Combinations comprising at least one of the foregoing can also be used.

The polysiloxane-polycarbonate copolymer can comprise 50 to 99 weight percent of carbonate units and 1 to 50 weight percent siloxane units. Within this range, the polyorganosiloxane-polycarbonate copolymer can comprise 70 to 98 weight percent, more specifically 75 to 97 weight percent of carbonate units and 2 to 30 weight percent, more specifically 3 to 25 weight percent siloxane units. In an exemplary embodiment, the polysiloxane-polycarbonate copolymer is endcapped with para-cumyl phenol.

In one embodiment, an exemplary polysiloxane-polycarbonate copolymer is a block copolymer having the structure shown in the Formula (22) below: 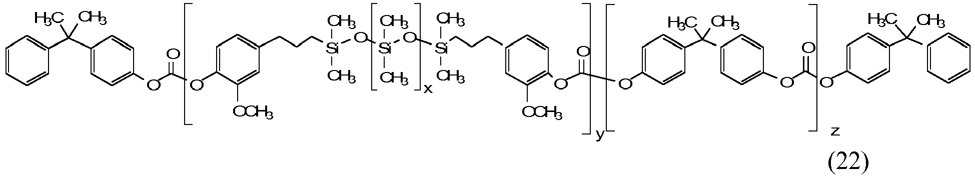 where the polysiloxane blocks are endcapped with eugenol, where x is 1 to 100, specifically 5 to 85, specifically 10 to 70, specifically 15 to 65, and more specifically 40 to 60. In one embodiment, y is 1 to 90 and z is 1 to 600. The polysiloxane block may be randomly distributed or controlled distributed amongst the polycarbonate blocks. In one embodiment, x is 30 to 50, y is 10 to 30 and z is 450 to 600.

When the polysiloxane polycarbonate copolymer comprises eugenol endcapped polysiloxane, the flame retardant polycarbonate composition comprises 0 to 25 wt% of the polysiloxane-polycarbonate copolymer. The polysiloxane content is 0 to 20 wt%, specifically 1 to 16 wt%, specifically 2 to 14 wt%, and more specifically 3 to 6 wt%, based on the total weight of the polysiloxane-polycarbonate copolymer. In one embodiment, the weight average molecular weight of the polysiloxane block is 29,000 to 30,000 Daltons using gel permeation chromatography with a bisphenol A polycarbonate absolute molecular weight standard.

In one embodiment, the polysiloxane-polycarbonate copolymer comprises 10 wt% or less, specifically 6 wt% or less, and more specifically 4 wt% or less, of the polysiloxane based on the total weight of the polysiloxane-polycarbonate copolymer. Polysiloxane-polycarbonate copolymers containing 10 wt% or less are generally optically transparent and are sometimes referred to as EXL-T as commercially available from Sabic.

In another embodiment, the polysiloxane-polycarbonate copolymer comprises 10 wt% or more, specifically 12 wt% or more, and more specifically 14 wt% or more, of the polysiloxane based on the total weight of the polysiloxane-polycarbonate copolymer. Polysiloxane-polycarbonate copolymers containing 10 wt% or more polysiloxane are generally optically opaque and are sometimes referred to as EXL-P as commercially available from Sabic.

The polysiloxane polycarbonate copolymer can have a weight average molecular weight of 2,000 to 100,000 Daltons, specifically 5,000 to 50,000 Daltons as measured by gel permeation chromatography using a crosslinked styrene-divinyl benzene column, at a sample concentration of 1 milligram per milliliter, and as calibrated with polycarbonate standards.

The polysiloxane polycarbonate copolymer can have a melt volume flow rate, measured at 300°C/1.2 kg, of 1 to 50 cubic centimeters per 10 minutes (cc/10 min), specifically 2 to 30 cc/10 min. Mixtures of polysiloxane polycarbonate copolymer of different flow properties can be used to achieve the overall desired flow property.

The polysiloxane polycarbonate copolymer is present in the flame retardant polycarbonate composition in an amount of 3 to 30 wt%, specifically 6 to 20 wt%, and more specifically 7 to 13 wt%, based on the total weight of the flame retardant polycarbonate composition.

The flame retardant polycarbonate composition can optionally include impact modifier(s). Suitable impact modifiers are typically high molecular weight elastomeric materials derived from olefins, monovinyl aromatic monomers, acrylic and methacrylic acids and their ester derivatives, as well as conjugated dienes. The polymers formed from conjugated dienes can be fully or partially hydrogenated. The elastomeric materials can be in the form of homopolymers or copolymers, including random, block, radial block, graft, and core-shell copolymers. Combinations of impact modifiers can be used.

A specific type of impact modifier is an elastomer-modified graft copolymer comprising (i) an elastomeric (i.e., rubbery) polymer substrate having a Tg less than 10°C, more specifically less than -10°C, or more specifically -40° to -80°C, and (ii) a rigid polymeric shell grafted to the elastomeric polymer substrate. Materials suitable for use as the elastomeric phase include, for example, conjugated diene rubbers, for example polybutadiene and polyisoprene; copolymers of a conjugated diene with less than 50 wt% of a copolymerizable monomer, for example a monovinylic compound such as styrene, acrylonitrile, n-butyl acrylate, or ethyl acrylate; olefin rubbers such as ethylene propylene copolymers (EPR) or ethylene-propylene-diene monomer rubbers (EPDM); ethylene-vinyl acetate rubbers; silicone rubbers; elastomeric C₁₋₈ alkyl (meth)acrylates; elastomeric copolymers of C₁₋₈ alkyl (meth)acrylates with butadiene and/or styrene; or combinations comprising at least one of the foregoing elastomers. materials suitable for use as the rigid phase include, for example, monovinyl aromatic monomers such as styrene and alpha-methyl styrene, and monovinylic monomers such as acrylonitrile, acrylic acid, methacrylic acid, and the C₁-C₆ esters of acrylic acid and methacrylic acid, specifically methyl methacrylate.

Specific exemplary elastomer-modified graft copolymers include those formed from styrene-butadiene-styrene (SBS), styrene-butadiene rubber (SBR), styrene-ethylene-butadiene-styrene (SEBS), ABS (acrylonitrile-butadiene-styrene), acrylonitrile-ethylene-propylene-diene-styrene (AES), styrene-isoprene-styrene (SIS), methyl methacrylate-butadiene-styrene (MBS), and styrene-acrylonitrile (SAN).

Impact modifiers are generally present in amounts of 1 to 30 wt%, specifically 3 to 20 wt%, based on the total weight of the polymers in the flame retardant polycarbonate composition. An exemplary impact modifier comprises an acrylic polymer in an amount of 2 to 15 wt%, specifically 3 to 12 wt%, based on the total weight of the flame retardant polycarbonate composition.

In one embodiment, the flame retardant polycarbonate composition may contain reinforcing fillers. Examples of reinforcing fillers are glass fibers, carbon fibers, metal fibers, and the like.

The glass fibers may be flat or round fibers. Flat glass fibers have an elliptical cross-sectional area, while round fibers have a circular cross-sectional area, where the cross-sectional areas are measured perpendicular to the longitudinal axis of the fiber. The glass fibers may be manufactured from "E-glass," "A-glass," "C-glass," "D-glass," "R-glass," "S-glass," as well as E-glass derivatives that are fluorine-free and/or boron-free. The glass fibers may be woven or non-woven. The glass fibers can have a diameter of 3 micrometers to 25 micrometers, specifically 4 micrometers to 20 micrometers, and more specifically 8 micrometers to 15 micrometers.

The carbon fibers may be either carbon nanotubes or carbon fibers derived from pitch or polyacrylonitrile. The carbon nanotubes can be single wall carbon nanotubes or multiwall carbon nanotubes. The carbon nanotubes can have diameters of 2.7 nanometers to 100 nanometers and can have aspect ratios of 5 to 1000. The aspect ratio is defined as the ratio of the length to the diameter.

The carbon fibers derived from pitch and polyacrylonitrile have a different microstructure from the carbon nanotubes. The carbon fibers can have a diameter of 3 micrometers to 25 micrometers, specifically 4 micrometers to 20 micrometers, and more specifically 8 micrometers to 15 micrometers and can have aspect ratios of 0.5 to 100.

The metal fibers can be whiskers (having diameters of less than 100 nanometers) or can have diameters in the micrometer regime. Metal fibers in the micrometer regime can have diameters of 3 to 30 micrometers. Exemplary metal fibers comprise stainless steel, aluminum, iron, nickel, copper, or the like, or a combination comprising at least one of the foregoing metals.

The flame retardant polycarbonate composition comprises the reinforcing fibers in an amount of 15 to 45 wt%, specifically 20 to 40 wt%, and more specifically 28 to 33 wt%, based on the total weight of the flame retardant polycarbonate composition.

The flame retardant polycarbonate composition also comprises a mineral filler. The mineral filler serves as a flame retardant synergist. The flame retardant synergist facilitates an improvement in the flame retardant properties when added to the flame retardant polycarbonate composition over a comparative polycarbonate composition that contains all of the same ingredients in the same quantities except for the synergist. Examples of the mineral filler are mica, talc, calcium carbonate, dolomite, wollastonite, barium sulfate, silica, kaolin, feldspar, barytes, or the like, or a combination comprising at least one of the foregoing mineral fillers. The mineral filler may have an average particle size of 0.1 to 20 micrometers, specifically 0.5 to 10 micrometers, and more specifically 1 to 3 micrometers. An exemplary mineral filler it talc having an average particle size of 1 to 3 micrometers.

The mineral filler is present in amounts of 0.1 to 20 wt%, specifically 0.5 to 15 wt%, and more specifically 1 to 5 wt%, based on the total weight of the flame retardant polycarbonate composition.

The flame retardant polycarbonate composition may also optionally contain additives such as antioxidants, antiozonants, stabilizers, thermal stabilizers, mold release agents, dyes, colorants, pigments, flow modifiers, or the like, or a combination comprising at least one of the foregoing additives.

As noted above, the flame retardant composition comprises a phosphazene compound. In one embodiment, the phosphazene compound is a phenoxyphosphazene oligomer.

The phosphazene compound used in the flame retardant composition is an organic compound having a -P=N- bond in the molecule. In one embodiment, the phosphazene compound comprises at least one species of the compound selected from the group consisting of a cyclic phenoxyphosphazene represented by the formula (23) below; a chainlike phenoxyphosphazene represented by the formula (24) below; and a crosslinked phenoxyphosphazene compound obtained by crosslinking at least one species of phenoxyphosphazene selected from those represented by the formulae (23) and (24) below, with a crosslinking group represented by the formula (25) below: 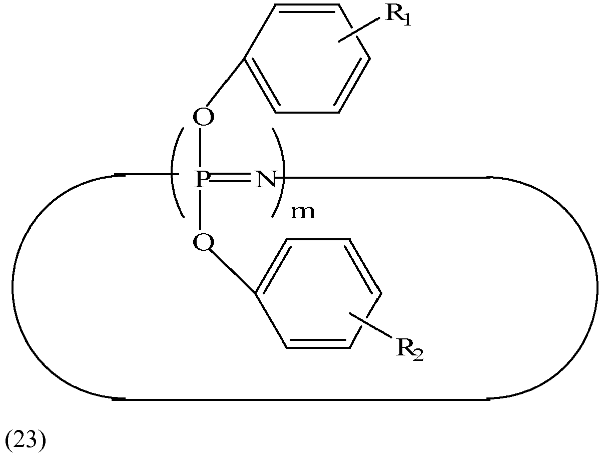 where in the formula (23), m represents an integer of 3 to 25, R¹ and R² are the same or different and are independently a hydrogen, a hydroxyl, a C₇₋₃₀ aryl group, a C₁₋₁₂ alkoxy, or a C₁₋₁₂ alkyl.

The chainlike phenoxyphosphazene represented by the formula (24) below: 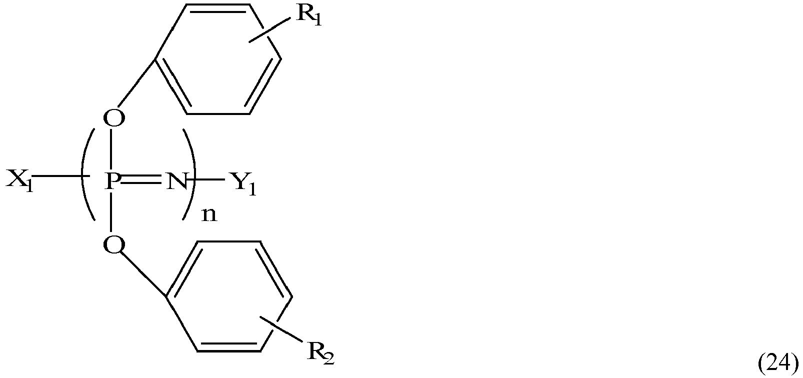 where in the formula (24), X¹ represents a -N=P(OPh)₃ group or a -N=P(O)OPh group, Y¹ represents a -P(OPh)₄ group or a -P(O) (OPh)₂ group, n represents an integer from 3 to 10000, Ph represents a phenyl group, R¹ and R² are the same or different and are independently a hydrogen, a halogen, a C₁₋₁₂ alkoxy, or a C₁₋₁₂ alkyl.

The phenoxyphosphazenes may also have a crosslinking group represented by the formula (25) below: 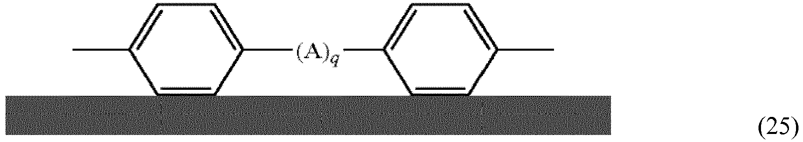 where in the formula (18), A represents -C(CH3)₂-, -SO₂-, -S-, or -O-, and q is 0 or 1.

In one embodiment, the phenoxyphosphazene compound has a structure represented by the formula (26) 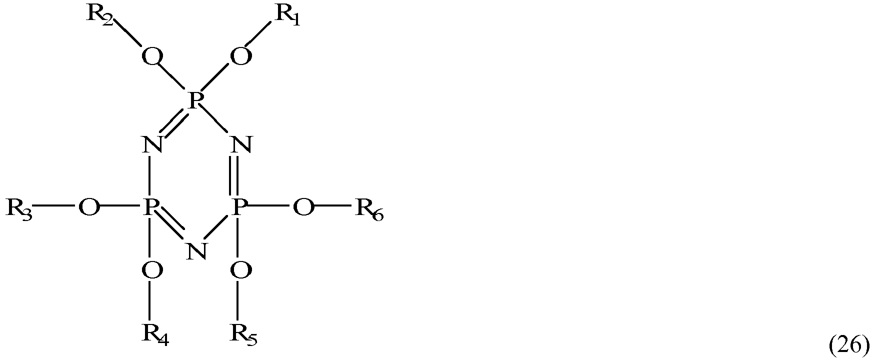 where R¹ to R₆ can be the same of different and can be an aryl group, an aralkyl group, a C₁₋₁₂ alkoxy, a C₁₋₁₂ alkyl, or a combination thereof.

In one embodiment, the phenoxyphosphazene compound has a structure represented by the formula (27)

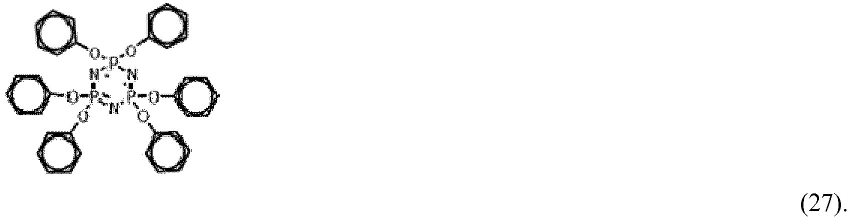

Commercially available phenoxyphosphazenes are FP-110® manufactured and distributed by Fushimi Pharmaceutical Co., Ltd., LY202® manufactured and distributed by Lanyin Chemical Co., Ltd., and SPB-100® manufactured and distributed by Otsuka Chemical Co., Ltd.

The cyclic phenoxyphosphazene compound represented by the formula (23) may be exemplified by compounds such as phenoxy cyclotriphosphazene, octaphenoxy cyclotetraphosphazene, and decaphenoxy cyclopentaphosphazene, obtained by allowing ammonium chloride and phosphorus pentachloride to react at 120 to 130°C to obtain a mixture containing cyclic and straight chain chlorophosphazenes, extracting cyclic chlorophosphazenes such as hexachloro cyclotriphosphazene, octachloro cyclotetraphosphazene, and decachloro cyclopentaphosphazene, and then substituting it with a phenoxy group. The cyclic phenoxyphosphazene compound may be a compound in which m in the formula (23) represents an integer of 3 to 8.

The chainlike phenoxyphosphazene compound represented by the formula (24) is exemplified by a compound obtained by subjecting hexachloro cyclotriphosphazene, obtained by the above-described method, to ring-opening polymerization at 220 to 250°C, and then substituting thus obtained chainlike dichlorophosphazene having a degree of polymerization of 3 to 10000 with phenoxy groups. The chain-like phenoxyphosphazene compound has a value of n in the formula (24) of 3 to 1000, specifically 5 to 100, and more specifically 6 to 25.

The crosslinked phenoxyphosphazene compound may be exemplified by compounds having a crosslinked structure of a 4,4'-diphenylene group, such as a compound having a crosslinked structure of a 4,4'-sulfonyldiphenylene (bisphenol S residue), a compound having a crosslinked structure of a 2,2-(4,4'-diphenylene) isopropylidene group, a compound having a crosslinked structure of a 4,4'-oxydiphenylene group, and a compound having a crosslinked structure of a 4,4'-thiodiphenylene group. The phenylene group content of the crosslinked phenoxyphosphazene compound is generally 50 to 99.9 wt%, and specifically 70 to 90 wt%, based on the total number of phenyl group and phenylene group contained in the cyclic phosphazene compound represented by the formula (23) and/or the chainlike phenoxyphosphazene compound represented by the formula (24). The crosslinked phenoxyphosphazene compound may be particularly preferable if it doesn't have any free hydroxyl groups in the molecule thereof. In an exemplary embodiment, the phosphazene compound comprises the cyclic phosphazene.

It is desirable for the flame retardant composition to comprise the phosphazene compound in an amount of 1 to 20 wt%, specifically 2 to 16 wt%, and more specifically 2.5 wt% to 14 wt%, based on the total weight of the flame retardant composition.

In one embodiment, the flame retardant polycarbonate composition may contain 1 to 15 wt% of a pigment, based on the total weight of the flame retardant polycarbonate composition. Examples of suitable pigments are titanium dioxide (TiO₂), zinc sulfide (ZnS), carbon black, carbon nanotubes, silica, alumina, or the like, or a combination comprising at least one of the foregoing pigments. An exemplary flame retardant polycarbonate composition may contain titanium dioxide and carbon black.

The flame retardant polycarbonate composition may also contain pentaerythritol tetrastearate in amounts of 0.01 to 2.0 wt%, based on the total weight of the flame retardant polycarbonate composition.

In one embodiment, the flame retardant polycarbonate composition may comprise an anti-drip agent. Fluorinated polyolefin and/or polytetrafluoroethylene may be used as an anti-drip agent. Anti-drip agents may also be used, for example a fibril forming or non-fibril forming fluoropolymer such as polytetrafluoroethylene (PTFE). The anti-drip agent may be encapsulated by a rigid copolymer such as, for example styrene acrylonitrile (SAN). PTFE encapsulated in SAN is known as TSAN. Encapsulated fluoropolymers may be made by polymerizing the encapsulating polymer in the presence of the fluoropolymer, for example, in an aqueous dispersion. TSAN may provide significant advantages over PTFE, in that TSAN may be more readily dispersed in the composition. A suitable TSAN may comprise, for example, 50 wt % PTFE and 50 wt % SAN, based on the total weight of the encapsulated fluoropolymer. The SAN may comprise, for example, 75 wt % styrene and 25 wt % acrylonitrile based on the total weight of the copolymer. Alternatively, the fluoropolymer may be pre-blended in some manner with a second polymer, such as for, example, an aromatic polycarbonate resin or SAN to form an agglomerated material for use as an anti-drip agent. Either method may be used to produce an encapsulated fluoropolymer.

The anti-drip agent may be added in the form of relatively large particles having a number average particle size of 0.3 to 0.7 mm, specifically 0.4 to 0.6 millimeters. The anti-drip agent may be used in amounts of 0.01 wt% to 5.0 wt%, specifically 0.1 to 1.0 wt%, and more specifically 0.2 to 0.8 wt%, based on the total weight of the flame retardant composition.

Other additives such as anti-oxidants, anti-ozonants, mold release agents, thermal stabilizers, levelers, viscosity modifying agents, free-radical quenching agents, other polymers or copolymers such as impact modifiers, or the like.

The preparation of the flame-retardant polycarbonate composition can be achieved by blending the ingredients under conditions that produce an intimate blend. All of the ingredients can be added initially to the processing system, or else certain additives can be precompounded with one or more of the primary components.

In one embodiment, the flame-retardant polycarbonate composition is manufactured by blending the polycarbonate composition with the phosphazene compound. The blending can be dry blending, melt blending, solution blending or a combination comprising at least one of the foregoing forms of blending.

In one embodiment, the flame-retardant polycarbonate composition can be dry blended to form a mixture in a device such as a Henschel mixer or a Waring blender prior to being fed to an extruder, where the mixture is melt blended. In another embodiment, a portion of the polycarbonate composition can be premixed with the phosphazene compound to form a dry preblend. The dry preblend is then melt blended with the remainder of the polycarbonate composition in an extruder. In one embodiment, some of the flame retardant polycarbonate composition can be fed initially at the mouth of the extruder while the remaining portion of the flame retardant polycarbonate composition is fed through a port downstream of the mouth.

Blending of the flame retardant polycarbonate composition involves the use of shear force, extensional force, compressive force, ultrasonic energy, electromagnetic energy, thermal energy or combinations comprising at least one of the foregoing forces or forms of energy and is conducted in processing equipment wherein the aforementioned forces are exerted by a single screw, multiple screws, intermeshing co-rotating or counter rotating screws, non-intermeshing co-rotating or counter rotating screws, reciprocating screws, screws with pins, barrels with pins, rolls, rams, helical rotors, or combinations comprising at least one of the foregoing.

Blending involving the aforementioned forces may be conducted in machines such as single or multiple screw extruders, Buss kneader, Henschel, helicones, Ross mixer, Banbury, roll mills, molding machines such as injection molding machines, vacuum forming machines, blow molding machine, or then like, or combinations comprising at least one of the foregoing machines.

The flame-retardant polycarbonate composition can be introduced into the melt blending device in the form of a masterbatch. For example, a portion of the polycarbonate composition can be pre-blended with the phosphazene flame retardant to form a masterbatch, which is then blended with the remaining ingredients to form the flame retardant polycarbonate composition. In such a process, the masterbatch may be introduced into the blending device downstream of the point where the remaining ingredients of the flame retardant composition is introduced.

In one embodiment, the flame-retardant polycarbonate composition disclosed herein is used to prepare molded articles such as for example, durable articles, electrical and electronic components, automotive parts, and the like. The compositions can be converted to articles using common thermoplastic processes such as film and sheet extrusion, injection molding, gas-assisted injection molding, extrusion molding, compression molding and blow molding.

In one embodiment, the flame-retardant polycarbonate compositions when prepared into test specimens having a thickness of at least 1.2 mm, exhibit a flammability class rating according to Underwriters Laboratories Inc. UL-94 of at least V-2, more specifically at least V-1, and yet more specifically at least V-0. In another embodiment, the flame-retardant polycarbonate compositions when prepared into specimens having a thickness of at least 2.0 millimeters, exhibit a flammability class rating according to Underwriters Laboratories Inc. UL-94 of at least V-2, more specifically at least V-1, and yet more specifically at least V-0.

Flammability tests were performed following the procedure of Underwriter's Laboratory Bulletin 94 entitled "Tests for Flammability of Plastic Materials, UL 94". Several ratings can be applied based on the rate of burning, time to extinguish, ability to resist dripping, and whether or not drips are burning. Samples for testing are bars having dimensions of 125 mm length×13 mm width by no greater than 13 mm thickness. Bar thicknesses were 0.6 mm or 0.8 mm. Materials can be classified according to this procedure as UL 94 HB (horizontal burn), V0, V1, V2, 5VA and/or 5VB on the basis of the test results obtained for five samples; however, the compositions herein were tested and classified only as V0, V1, and V2, the criteria for each of which are described below.

V0: In a sample placed so that its long axis is 180 degrees to the flame, the period of flaming and/or smoldering after removing the igniting flame does not exceed ten (10) seconds and the vertically placed sample produces no drips of burning particles that ignite absorbent cotton. Five bar flame out time is the flame out time for five bars, each lit twice, in which the sum of time to flame out for the first (t1) and second (t2) ignitions is less than or equal to a maximum flame out time (t1+t2) of 50 seconds.

V1: In a sample placed so that its long axis is 180 degrees to the flame, the period of flaming and/or smoldering after removing the igniting flame does not exceed thirty (30) seconds and the vertically placed sample produces no drips of burning particles that ignite absorbent cotton. Five bar flame out time is the flame out time for five bars, each lit twice, in which the sum of time to flame out for the first (t1) and second (t2) ignitions is less than or equal to a maximum flame out time (t1+t2) of 250 seconds.

V2: In a sample placed so that its long axis is 180 degrees to the flame, the average period of flaming and/or smoldering after removing the igniting flame does not exceed thirty (30) seconds, but the vertically placed samples produce drips of burning particles that ignite cotton. Five bar flame out time is the flame out time for five bars, each lit twice, in which the sum of time to flame out for the first (t1) and second (t2) ignitions is less than or equal to a maximum flame out time (t1+t2) of 250 seconds.

In an embodiment, the flame retardant polycarbonate compositions are of particular utility in the manufacture flame retardant articles that pass the UL94 vertical burn tests, in particular the UL94 5VB standard. In the UL94 vertical burn test, a flame is applied to a vertically fastened test specimen placed above a cotton wool pad. To achieve a rating of 5VB, burning must stop within 60 seconds after five applications of a flame to a test bar, and there can be no drips that ignite the pad. Various embodiments of the compositions described herein meet the UL94 5VB standard.

Izod Impact Strength is used to compare the impact resistances of plastic materials. Notched Izod impact strength was determined at both 23°C and 0°C using a 3.2-mm thick, molded, notched Izod impact bar. It was determined per ASTM D256. The results are reported in Joules per meter.

Heat deflection temperature (HDT) is a relative measure of a material's ability to perform for a short time at elevated temperatures while supporting a load. The test measures the effect of temperature on stiffness: a standard test specimen is given a defined surface stress and the temperature is raised at a uniform rate. HDT was determined as flatwise under 1.82 MPa loading with 3.2 mm thickness bar according to ASTM D648. Results are reported in °C.

The flame retardant polycarbonate composition displays an advantageous combination of properties such as ductility, melt processability, impact strength and flame retardancy.

The following examples, which are meant to be exemplary, not limiting, illustrate the flame retardant polycarbonate compositions and methods of manufacturing of some of the various embodiments of the flame-retardant polycarbonate compositions described herein.

### EXAMPLE

### Example 1

The following examples were conducted to demonstrate the disclosed composition and the method of manufacturing a flame retardant polycarbonate composition that comprises the polycarbonate composition that comprises repeat units derived from sebacic acid and bisphenol A. The flame retardant polycarbonate composition comprises in addition to the polycarbonate composition, a phosphazene flame retardant and a mineral synergist - talc. The talc and the phosphazene flame retardant act synergistically to produce the flame retardant polycarbonate composition that displays an advantageous combination of properties such as ductility, melt processability, impact strength and flame retardancy. The flame retardant polycarbonate composition comprises a polycarbonate composition comprising the first copolyestercarbonate copolymer and the second copolyestercarbonate copolymer. As detailed above, the first copolyestercarbonate copolymer has a lower molecular weight than the second copolyestercarbonate copolymer. The second copolyestercarbonate copolymer is endcapped with paracumyl phenol.

Table 1 lists ingredients used in the following examples along with a brief description of these ingredients. Table 2 lists the compounding conditions in the extruder, while Table 3 lists the compounding conditions in the molding machine. Table 4 lists comparative compositions along with compositions of the disclosure.

**Table 1**

| Ingredient | Description |
|---|---|
| PC3 | First copolyestercarbonate copolymer; contains 6 mole percent sebacic acid; has a Mw = 21,500 as determined by GPC and a polydispersity index of 2.6 |
| PC4 | Second copolyestercarbonate copolymer;- contains 8.25 mole percent sebacic acid; has a Mw = 36,000 as determined by GPC and a polydispersity index of 2.7 |
| PC2 | Bisphenol A polycarbonate (linear) endcapped with paracumyl phenol having a weight average molecular weight of 30,000 Daltons on an absolute polycarboante molecular weight scale. |
| PC1 | Bisphenol A polycarbonate (linear) endcapped with paracumyl phenol having a weight average molecular weight of 22,000 Daltons on an absolute polycarboante molecular weight scale. |
| PC5 | Bisphenol A polycarbonate-polysiloxane copolymer comprising about 20% by weight of siloxane, 80% by weight BPA and endcapped with paracumyl phenol with Mw target=28500-30000 grams per mole. |
| PC6 | Polycarbonate branched using THPE as the branching agent and endcapped with HBN (p-cyanophenol). |
| PC7 | Branched polycarbonate - branched with THPE |
| Acrylic polymer impact modifier pellets, EXL3330 | Impact modifier |
| MBS powder - Stabilized | Impact modifier |
| Elvaloy 1125AC from Dupont | White pigment |
| Zinc sulfide (ZnS) | Filler |
| Nittobo, CSG 3PA-830, flat fiber | Filler |
| Lexan bonding glass | Filler |
| Non-bonding glass | Filler |
| Pelletized carbon fiber, Fortafil 202 | Mold release agent |
| Pentaerythritol tetrastearate | Thermal stabilizer |
| Hindered phenol anti-oxidant | Thermal stabilizer |
| Phosphite stabilizer | Thermal stabilizer |
| ADR 4368 (cesa 9900) | Thermal stabilizer |
| Phenoxyphosphazene | Flame retardant compound (SPB-100) |
| T-SAN | |
| HS-T0.5 | Talc |
| TISMO, Potassium Titanate fibril | Synergist |
| Fine Talc | Mineral filler |

The compounding was conducted on a Toshiba SE37mm twin-screw extruder having 11 barrels. The temperature for each of the barrels is detailed in the Table 2. The glass fiber was fed downstream of the throat of the extruder into barrel number 7. All the other components were fed from main throat from upper stream. The remaining additives (fillers, impact modifiers, mold release agents) were pre-blended with the polycarbonate powder in a super blender and then fed into the extruder. The various compositions along with the properties are detailed in the Table 4. The test standards used for the property measurements are detailed in the respective property tables.

**Table 2**

| Parameters | UOM | Settings |
|---|---|---|
| Compounder Type | NONE | Toshiba TEM-37BS |
| Barrel Size | mm | 1500 |
| Die | mm | 4 |
| Zone 1 Temp | °C | 50 |
| Zone 2 Temp | °C | 100 |
| Zone 3 Temp | °C | 200 |
| Zone 4 Temp | °C | 250 |
| Zone 5 Temp | °C | 260 |
| Zone 6 Temp | °C | 260 |
| Zone 7 Temp | °C | 260 |
| Zone 8 Temp | °C | 260 |
| Zone 9 Temp | °C | 260 |
| Zone 10 Temp | °C | 260 |
| Zone 11 Temp | °C | 260 |
| Die Temp | °C | 265 |
| Screw speed | rpm | 300 |
| Throughput | kg/hr | 40 |
| Vacuum | MPa | -0.08 |
| Side Feeder speed | rpm | 300 |
| Side feeder 1 | | barrel 7 |

The molding conditions are detailed in the Table 3.

**Table 3**

| Parameter | Unit | Settings |
|---|---|---|
| Pre-drying time | Hour | 4 |
| Pre-drying temp | °C | 100 |
| Hopper temp | °C | 50 |
| Zone 1 temp | °C | 280 |
| Zone 2 temp | °C | 300 |
| Zone 3 temp | °C | 300 |
| Nozzle temp | °C | 290 |
| Mold temp | °C | 80-100 |
| Screw speed | rpm | 60-100 |
| Back pressure | kgf/cm² | 30-50 |
| Cooling time | s | 20 |
| Molding Machine | NONE | FANUC |
| Shot volume | mm | 84 |
| Injection speed(mm/s) | mm/s | 60 |
| Holding pressure | kgf/cm² | 800 |
| Max. Injection pressure | kgf/cm² | 1000 |

The compositions were all compounded from twin-screw extruder, and the pellets were collected for evaluation and molding. The composition viscosity was measured by MVR and the ASTM standard molding parts were evaluated accordingly to the standards for flexural, tensile, notched Izod and multi axis impact. The surface quality was evaluated by SEM, OM and visual inspection with molded parts. The molecular weight of the composites was evaluated by GPC.

Table 4 below details some comparative flame retardant compositions along with the mechanical and flame retardant properties. Sample #s 1 - 2 and 4 - 5 shown in the Table 4 are comparative samples. They do not contain talc. Sample # 3 which contains both talc and the phosphazene is representative of the disclosed flame retardant polycarbonate composition.

### Table 4

Table 4 shows that the introduction of the phenoxyphosphazene compound does not adversely impact the mechanical properties. The flame retardant compositions of the Table 4 contain a polycarbonate composition that comprises PC3, PC4, PC5 and PC6.

When 8 wt% phosphazene added into to the polycarbonate composition which contains glass fiber (in amounts of 30 wt%, 40 wt%, and 50 wt% as seen in the examples in Table 4), a flame retardancy of V-0 @ 1.2mm can be achieved. Table 4 shows the composition along with the properties.

**Table 4**

| | | | Comparative | | | | |
|---|---|---|---|---|---|---|---|
| ITEM DESCRIPTION | | UNITS | Sample #1 | Sample #2 | Sample #3 | Sample #4 | Sample #5 |
| PC4 | | wt% | 17.4 | 14.1 | 14.1 | 10.7 | 10.7 |
| PC3 | | wt% | 34.7 | 28 | 18 | 21.4 | 11.4 |
| PC5 | | wt% | 8 | 8 | 8 | 8 | 8 |
| PC6 | | wt% | | | 10 | | 10 |
| Nittobo, CSG 3PA-830, flat fiber | | wt% | 30 | 40 | 40 | 50 | 50 |
| PhenoxyPhosphazene | | wt% | 8 | 8 | 8 | 8 | 8 |
| SAN encapsulated PTFE - intermediate resin | | wt% | 0.5 | 0.5 | 0.5 | 0.5 | 0.5 |
| Anti-oxidant, stabilizer, flow promoter, colorant, etc. | | | 1.9 | 1.9 | 1.9 | 1.9 | 1.9 |

| **Porperties.** | **TEST METHOD** | **UNITS** | **#1** | **#2** | **#3** | **#4** | **#5** |
|---|---|---|---|---|---|---|---|
| HDT | ASTM D648 | °C | 103 | 98.5 | 101 | 95.5 | 96 |
| Tensile Modulus | ASTM D638 | MPa | 8994.8 | 11779.4 | 11913.6 | 15023.6 | 15221.8 |
| Tensile Strength | ASTM D638 | MPa | 113.4 | 126.4 | 136 | 133.8 | 138.4 |
| Tensile Elongation | ASTM D638 | % | 2.33 | 2.11 | 2.37 | 1.74 | 1.8 |
| Notched IZOD Impact Strength | ASTM D256 | J/m | 139 | 97.4 | 155 | 121 | 139 |
| Unnotched IZOD Impact Strength | ASTM D4812 | J/m | 443 | 287 | 503 | 318 | 408 |
| Notched Charpy Impact Strength | ISO 179 | kJ/m2 | 13.16 | 12.1 | 14.5 | 12.07 | 12.37 |
| Flexural Modulus | ISO 178 | MPa | 7285.4 | 9483 | 9715.2 | 12215.8 | 12504 |
| Flexural Strength | ISO 178 | MPa | 152.68 | 165.74 | 183.86 | 178 | 197.54 |
| MVR, 300C/2.16Kg | ASTM D1238 | cm³/10 min | 24.7 | 26.1 | 22.9 | 14.6 | 15.9 |
| MFR, 300C/2.16Kg | ASTM D1238 | cm³/10 min | 31.4 | 35 | 31.1 | 21.3 | 23.6 |
| FR performance | UL 94, V-0@ 1.2mm | | Pass | Pass | Pass | Pass | Pass |

Table 5 reflects shows properties of the composition when a flame retardant synergist such as talc is added to the flame retardant composition. The compositions of Table 5 were made in the same manner as the compositions of Table 4. Details of the extrusion and molding are provided in the Tables 2 and 3 above.

**Table 5**

| Item Description | | Unit | Sample #6 | Sample #7 | Sample #8 | Sample #9 |
|---|---|---|---|---|---|---|
| PC3 | | wt% | 36.6 | 37 | 37.6 | 36.6 |
| Nittobo, CSG 3PA-830, flat fiber | | % | 30 | 30 | 30 | 30 |
| PC4 | | wt% | 23 | 24.6 | 25 | 20 |
| Others (anti-oxidant, mold release agent, stabilizer, etc.) | | wt% | 0.8 | 0.8 | 0.8 | 0.8 |
| Acrylic polymer (impact modifier) | | wt% | | | | 5 |
| Phenoxyphosphazene | | wt% | 7 | 5 | 4 | 5 |
| T-SAN | | wt% | 0.6 | 0.6 | 0.6 | 0.6 |
| HS-T0.5 | | wt% | 2 | 2 | 2 | 2 |

| Typical Properties | Test Description | Unit | Sample #6 | Sample #7 | Sample #8 | Sample #9 |
|---|---|---|---|---|---|---|
| 300C/2.16Kg | ASTM D1238 | cm³/10min | 26.3 | 21.4 | 19.9 | 13.9 |
| Notched IZOD | ASTM D256 | J/m | 110 | 109 | 118 | 136 |
| Unnotched IZOD | ASTM D4812 | J/m | 521 | 472 | 549 | 555 |
| Tensile Modulus | ASTM D638 | MPa | 9669.8 | 9430.4 | 9454.8 | 8916.4 |
| Tensile Stress @ Break | ASTM D638 | MPa | 118.4 | 118.6 | 119 | 107 |
| Tensile Elongation @ Break | ASTM D638 | % | 2.12 | 2.2 | 2.2 | 2.2 |
| Flexural Modulus | ASTM D790 | MPa | 8200 | 8320 | 8230 | 7850 |
| Flexural Strength | ASTM D790 | MPa | 182 | 180 | 180 | 167 |
| Heat Deflection Temperature | ASTM D648 | °C | 106 | 111 | 114 | 112 |
| Flame Retardancy | UL 94 (V0 @ 1.5mm) | | Pass | Pass | Pass | Fail |
| p(FTP) | UL 94-VO @1.5 mm, normal | | 0.9965 | 0.9978 | 0.33 | 0.6697, V1 |
| p(FTP) | UL 94-VO @1.5 mm, aging | | 0.9568 | 0.9946 | 0.7199 | 0.375, V1 |
| p(FTP) | UL 94-V0 @2.0 mm | | 0.9992 | 0.9975 | 0.9997 | 0.3478 (1.0@V1) |
| | | | | | | |

From the Table 5, it may be seen that the addition of talc along with 5 to 7 wt% of the phenoxyphosphazene compound improves the flame retardancy. The flame retardant compositions display a UL 94-V0 rating at 1.5 millimeter thickness; and also pass UL 94-V0 rating at 2.0 millimeter thickness. Sample #9 that contains an acrylate impact modifier, has a flame retardance of V-1 when measured according to UL 94 standards.

Table 6 and 7 depicts compositions that comprise a mineral filler (talc) and a branched polycarbonate. In the Table 6, the polycarbonate composition comprises the first copolyestercarbonate copolymer, the second copolyestercarbonate copolymer and a branched polycarbonate. The branched polymer is branched using THPE as a branching agent and endcapped with (cyanophenol) HBN. Table 6 details the compositions along with some of the properties, while Table 7 details the remaining properties.

**Table 6**

| Item Description | | Unit | Sample #10 | Sample #11 (Comparative) | Sample #12 (Comparative) | Sample #13 | Sample #14 |
|---|---|---|---|---|---|---|---|
| PC3 | | % | 38.7 | 28.7 | 23.7 | 26.7 | 21.7 |
| PC6 | | % | | 15 | 15 | | |
| PC7 | | % | | | | 15 | 15 |
| Nittobo, CSG 3PA-830, flat fiber | | % | 30 | 30 | 30 | 30 | 30 |
| PC4 | | % | 23 | 20 | 20 | 20 | 20 |
| Phosphorus acid 45 % | | % | 0.01 | 0.01 | 0.01 | 0.01 | 0.01 |
| ADR 4368 (cesa 9900) | | % | 0.1 | 0.1 | 0.1 | 0.1 | 0.1 |
| Pentaerythritol tetrastearate | | % | 0.5 | 0.5 | 0.5 | 0.5 | 0.5 |
| Hindered phenol anti-oxidant | | % | 0.1 | 0.1 | 0.1 | 0.1 | 0.1 |
| Phosphite stabilizer | | % | 0.1 | 0.1 | 0.1 | 0.1 | 0.1 |
| Acrylic polymer impact modifier | | % | | | 5 | | 5 |
| phenoxyphosphazene | | % | 5 | 5 | 5 | 5 | 5 |
| T-SAN | | % | 0.5 | 0.5 | 0.5 | 0.5 | 0.5 |
| HS-T0.5 | | % | 2 | | | 2 | 2 |

| Properties | | | | | | | |
|---|---|---|---|---|---|---|---|
| MVR@ 300C/2.16Kg | ASTM D1238 | cm³/10min | 37.1 | 20.1 | 12.2 | 12.3 | 7.89 |
| Notched IZOD | ASTM D256 | J/m | 101 | 120 | 190 | 104 | 133 |
| Unnotched IZOD | ASTM D4812 | J/m | 533 | 635 | 775 | 502 | 583 |
| Tensile Modulus | ASTM D 638 | MPa | 9713.8 | 9498.4 | 8808.6 | 9489 | 8845.4 |
| Tensile Stress @ Break | ASTM D638 | MPa | 121.6 | 130.6 | 118.6 | 115.2 | 104.6 |

**Table 7**

| Property | Standard | Unit | Sample #10 | Sample #11 (Comparative) | Sample #12 (Comparative) | Sample #13 | Sample #14 |
|---|---|---|---|---|---|---|---|
| Tensile Elongation @ Break | ASTM D638 | % | 2.2 | 2.3 | 2.4 | 2.1 | 2.2 |
| Flexural Modulus | ASTM D790 | MPa | 8160 | 8060 | 7820 | 8200 | 7670 |
| Flexural Strength | ASTM D790 | MPa | 176 | 188 | 187 | 174 | 165 |
| Heat Deflection Temperature | ASTM D648 | °C | 111 | 116 | 115 | 115 | 115 |
| Flame Retardancy | UL94, V0 @ 1.5mm | | V0, 1.5mm | V0, 1.5mm | V1 @ 1.5mm | V0, 1.5mm | V1 @ 1.5mm |
| p(FTP) | UL 94-V0@1.5 mm, normal | | 0.398 (1.0 @V1) | 1.0@V1 | 0.998@V1 | 0.997 | 0.982 @V1 |
| p(FTP) | UL 94-VO @1.5mm, aging | | 0.381 (1.0@V1) | 0.905 V0 | 0.810 @V1 | 0.969 | 0.653 @V1 |
| p(FTP) | UL 94-V0 @2.0 mm | | 0.907 | 0.814 | 0.235 (1.0 @V1) | 1.0 | 0.811 (1.0 @V1) |

Tables 6 and 7 show that when a mineral filler is used in the flame retardant compositions in conjunction with the polycarbonate copolymers and the phenoxyphosphazene compounds, the flame retardant polycarbonate composition shows a flame retardancy of V-0 or V-1 when measured under UL-94 standards.

From the Tables 5 - 7, it may be seen that the flame retardant compositions have a notched Izod impact strength of 100 to 140 Joules/meter (J/m), specifically 105 to 135 J/m, and more specifically 110 to 125 J/m when measured as per ASTM D256. From the Tables 5 - 7, it may also be seen that the flame retardant compositions do not undergo any significant reduction in the heat distortion temperature upon the introduction of the flame retardant phosphazene compound. The heat distortion temperature of the flame retardant compositions is 100 to 140°C, specifically 110 to 135°C, and more specifically 115 to 130°C, when measured as per ASTM D648.

In one embodiment, a molded article of the composition has a UL 94 V-0 rating at a thickness of 1.5 mm, 2.0 mm, or between 1.0 mm and 2.0 mm.

In another embodiment, a molded article of the composition has a UL 94 V-0 rating at a thickness of less than or equal to 2 mm, specifically at a thickness of less than or equal to 1.5 mm, specifically at a thickness of less than or equal to 1.0 mm.

As seen from the Tables 4 - 7 above, melt volume flow rate (abbreviated as "MVR") measures the rate of extrusion of a thermoplastic through an orifice at a prescribed temperature and load. The flame retardant polycarbonate compositions can have an MVR, measured at 300°C under a load of 2.16 kg, of 7 to 40 cubic centimeters per 10 minutes (cm³/10 min), specifically 12 to 35 cm³/10 min, specifically 15 to 30 cm³/10 min, and more specifically 18 to 28 cm³/10 min. MVR was measured according to ASTM D 1238.

In one embodiment, the composition has a haze value of less than 1.5% at 3.2 mm thickness when measured according to ASTM D1003, specifically of less than 2% at 2 mm thickness when measured according to ASTM D1003.

From the Tables 4 - 8 above, it may be seen that it talc is not used as a synergist, then at least 8 wt% phosphazene is to be used to achieve a flame retardancy of V-0 @ 1.2mm or above, when tested as per a UL-94 protocol. When talc is used, a flame retardancy of V-0 @ 1.5 mm or above is achieved with just the use of at least 4 wt% of phosphazene. The use of phosphazene makes it easy to achieve V-1 or V-2 with different thicknesses.

### Example 2

The following example was conducted to demonstrate the method of manufacturing a flame retardant polycarbonate composition that comprises the polycarbonate homopolymers and a polysiloxane-polycarbonate copolymer. This example also demonstrates the synergistic effect between the phosphazene and the talc in a polycarbonate composition. The polycarbonate composition comprises either a linear polycarbonate and a polysiloxane-polycarbonate copolymer or a mixture of a linear polycarbonate, a branched polycarbonate and a polysiloxane-polycarbonate copolymer. The flame retardant composition contains a combination of a phosphazene compound and a mineral filler (talc), with the talc serving as the synergist.

Table 8 lists ingredients used in the following examples along with a brief description of these ingredients. Table 9 lists the compounding conditions and Table 10 lists molding conditions. Table 11 lists comparative compositions that were prepared without the synergist talc.

**Table 8**

| Ingredient | Description |
|---|---|
| PC2 | Bisphenol A polycarbonate (linear) endcapped with paracumyl phenol having a weight average molecular weight of 30,000 Daltons on an absolute polycarboante molecular weight scale. |
| PC1 | Bisphenol A polycarbonate (linear) endcapped with paracumyl phenol having a weight average molecular weight of 22,000 Daltons on an absolute polycarboante molecular weight scale. |
| PC5 | Bisphenol A polycarbonate-polysiloxane copolymer comprising about 20% by weight of siloxane, 80% by weight BPA and endcapped with paracumyl phenol with Mw target=28500-30000 grams per mole. |
| PC7 | Branched polycarbonate - branched with THPE |
| SAN encapsulated PTFE | TSAN |
| Nittobo, CSG 3PA-830, flat fiber | Glass fiber. |
| Pentaerythritol tetrastearate | Thermal stabilizer |
| HiWax 110 | Polyethylene wax |
| Phosphite stabilizer | Thermal stabilizer |
| ADR 4368 (cesa 9900) | Thermal stabilizer |
| Phenoxyphosphazene | Flame retardant compound (SPB-100) |
| HS-T0.5 | Talc synergist |

The compounding was conducted on a Toshiba SE37mm twin-screw extruder having 11 barrels. The temperature for each of the barrels is detailed in the Table 9. Flame retardant is pre-blended with other additives and fed at main throat. Resins are also fed from main throat. The glass fiber was fed down stream of the throat of the extruder into barrel number 7. The pellets from composite are then dried and evaluated for molecular weight, rheology performance, and molded for mechanical strength and flame retardant evaluations.

The molding conditions are detailed in the Table 10. The composition along with the properties is detailed in the Table 11. The compositions of Table 11 are all comparative compositions as they do not contain the phosphazene compound. Sample #15 in Table 11 is a comparative sample and contains bisphenol A bis (diphenyl phosphate) and contains talc. The test standards according to which the tests were conducted and the properties are measured are detailed in the respective property tables.

**Table 9**

| Parameters | Units | Settings |
|---|---|---|
| Compounder Type | NONE | Toshiba TEM-37BS |
| Barrel Size | mm | 1500 |
| Die | mm | 3 |
| Zone 1 Temp | °C | 50 |
| Zone 2 Temp | °C | 100 |
| Zone 3 Temp | °C | 200 |
| Zone 4 Temp | °C | 255 |
| Zone 5 Temp | °C | 255 |
| Zone 6 Temp | °C | 255 |
| Zone 7 Temp | °C | 255 |
| Zone 8 Temp | °C | 255 |
| Zone 9 Temp | °C | 260 |
| Zone 10 Temp | °C | 265 |
| Zone 11 Temp | °C | 270 |
| Die Temp | °C | 280 |
| Screw speed | rpm | 350 |
| Throughput | kg/hr | 30 |
| Torque | None | 40 |
| Vacuum | MPa | -0.08 |
| Side Feeder speed | rpm | 250 |
| Side feeder 1 | | barrel 7 |
| Melt Temperature | °C | 270 |

**Table 10**

| Parameter | Unit | Settings |
|---|---|---|
| Pre-drying time | Hour | 3 |
| Pre-drying temp | °C | 120 |
| Hopper temp | °C | 50 |
| Zone 1 temp | °C | 260 |
| Zone 2 temp | °C | 265 |
| Zone 3 temp | °C | 270 |
| Nozzle temp | °C | 265 |
| Mold temp | °C | 50 |
| Screw speed | rpm | 80 |
| Back pressure | kgf/cm² | 70 |
| Cooling time | seconds | 15 |
| Injection speed(mm/s) | mm/s | 150 |
| Holding pressure | kgf/cm² | 100 |
| Max. Injection pressure | kgf/cm² | 1000 |

The compositions were all compounded from twin-screw extruder, and the pellets were collected for evaluation and molding. The composition viscosity was measured by MVR and the ASTM standard molding parts were evaluated accordingly to the standards for flexural, tensile, notched Izod and multi axis impact. The molecular weight of the composites was evaluated by GPC.

Table 11 below details the flame retardant polycarbonate composition that comprises linear polycarbonate and a polysiloxane-polycarbonate copolymer. Sample # 15 is the comparative sample and contains 12 wt% of a flame retardant composition that comprises talc (5 wt%) and BDADP (7 wt%). Sample #s 16 and 17 both contain 3 wt% of the phenoxyphosphazene. Sample # 18 contains 2 wt% of talc and 3 wt% of phenoxyphosphazene for a total flame retardant composition of 5 wt%, while Sample # 21 contains 7 wt% of the flame retardant composition - 2 wt% of talc and 5 wt% of phenoxyphosphazene.

**Table 11**

| | | Comparative | | | | Comparative | | |
|---|---|---|---|---|---|---|---|---|
| Item Description | Unit | Sample #15 | Sample #16 | Sample #17 | Sample #18 | Sample #19 | Sample #20 | Sample #21 |
| PCP 1300 | wt% | 16 | 18.8 | 18.6 | 18.2 | 18.2 | 18 | 17.6 |
| 100 GRADE PCP | wt% | 32.1 | 37.5 | 37.2 | 36.4 | 36.4 | 36.1 | 35.3 |
| 20% PC/SILOXANE COPOLYMER,PCP ENDCAPPED | wt% | 8 | 9.4 | 9.3 | 9.1 | 9.1 | 9 | 8.8 |
| SAN encapsulated PTFE - intermediate resin | wt% | 0.6 | | 0.6 | | | 0.6 | |
| PENTAERYTHRITOL TETRASTEARATE | wt% | 0.6 | 0.6 | 0.6 | 0.6 | 0.6 | 0.6 | 0.6 |
| HINDERED PHENOL ANTI -OXIDANT | wt% | 0.1 | 0.1 | 0.1 | 0.1 | 0.1 | 0.1 | 0.1 |
| PHOSPHITE STABILIZER | wt% | 0.1 | 0.1 | 0.1 | 0.1 | 0.1 | 0.1 | 0.1 |
| PE wax | wt% | 0.5 | 0.5 | 0.5 | 0.5 | 0.5 | 0.5 | 0.5 |
| HS-T0.5 (talc) | wt% | 5 | | | 2 | | | 2 |
| Phenoxyphosphazene | wt% | | 3 | 3 | 3 | 5 | 5 | 5 |
| BPADP | wt% | 7 | | | | | | |
| Nittobo, CSG 3PA-830, flat fiber | wt% | 30 | 30 | 30 | 30 | 30 | 30 | 30 |

**Table 12**

| | | | Comparative | | | | Comparative | | |
|---|---|---|---|---|---|---|---|---|---|
| Typical Properties | Test Method | Units | Sample #15 | Sample #16 | Sample #17 | Sample #18 | Sample #19 | Sample #20 | Sample #21 |
| Notched IZOD | ASTM D256 | J/m | 88 | 173 | 164 | 95.8 | 175 | 169 | 96.4 |
| Unnotched IZOD | ASTM D256 | J/m | 348 | 637 | 664 | 316 | 704 | 592 | 422 |
| HDT | ASTM D648 | °C | 109 | 131 | 130 | 126 | | | |
| MFR | ASTM D1238 | g/10min | 12.9 | 8.82 | 9.11 | 36.8 | 10.8 | 11.3 | 40.9 |
| Tensile Modulus | ASTM D638 | MPa | 10397 | 8645 | 8767.4 | 9448.8 | 9170 | 9163.6 | 9760.6 |
| Tensile Strength | ASTM D638 | MPa | 119.4 | 117.4 | 118.4 | 117.4 | 124 | 124 | 121.4 |
| Tensile Elongation | ASTM D638 | % | 2.1 | 2.6 | 2.5 | 2.2 | 2.5 | 2.5 | 2.1 |
| Flexural Modulus | ASTM D790 | MPa | 8360 | 7030 | 7090 | 7490 | 6690 | 6710 | 6950 |
| Flexural Strength | ASTM D790 | MPa | 159 | 170 | 170 | 154 | 174 | 175 | 162 |
| Mw | | Daltons | 51693 | 52863 | 50685 | 39825 | 52441 | 50473 | 40443 |
| Flame Retardancy | UL 94 | | V0 @ 1.2mm | | | | | | V0 @ 1.0mm |
| p(FTP) @1.0mm, normal | UL94 | | 0.994 | 0.002 | 0 | 0.184 | 0.479 | 0.279 | 0.982 |
| p(FTP) @1.0mm, aging | UL94 | | 0.538 | 0.000 | 0.001 | 0.053 | 0.950 | 0.799 | 0.828 |
| p(FTP) @1.2mm, normal | UL94 | | 0.999 | 0.043 | 0 | 0.975 | 0.97 | 0.986 | 0.969 |
| p(FTP) @1.2mm, aging | UL94 | | 0.773 | | 0.025 | 0.124 | 0.581 | 0.485 | 0.935 |

The compositions of the Table 11 show that the introduction of the phenoxyphosphazene compound does not adversely impact the mechanical properties. This can be witnessed is the Table 12, which displays the properties of the compositions of Table 11. From the Tables 11 and 12, it may be seen that the compositions that contain the synergist and the phenoxyphosphazene compound have a lower melt viscosity than those compositions that do not contain the synergist and the phenoxyphosphazene compound. This is unexpected since the talc is a solid filler and it would be expected to increase the melt viscosity. The flame retardant compositions also have a higher flexural modulus than other comparative compositions that do not contain the synergist and the phenoxy phosphazene compound.

For example, the Sample # 15 which contains 12 wt% of a flame retardant package that contains BDADP has a notched Izod impact strength of 88 Joules per meter and a probability of achieving a first time pass [p(FTP)] at 1.0 mm thickness of achieving V-0 as per UL-94 of 0.994. Sample # 21 which contains phenoxyphosphazene and talc for a total flame retardant composition of 5 wt%, has a higher impact strength of 96.4 Joules per meter and a p(FTP) of 0.982. Thus it can be seen that the flame retardant composition comprising phenoxyphosphazene and talc produces equivalent flame retardant properties as a flame retardant composition comprising BDADP and talc, even when present at a lower weight percent (7 wt% for Sample # 21 versus 12 wt% for Sample # 15). The presence of the phenoxyphosphazene at lower weight fractions than the BDADP and its miscibility with the polymer permits the preservation of polycarbonate properties such as ductility and impact strength.

In addition, a comparison between Sample #16 and 18 shows that the p(FTP) value at 1.2 millimeter thickness (normal sample) for Sample #16 is 0.043. Sample # 18 in contrast which contains only 2 wt% of talc in addition to the 3 wt% of phenoxyphosphazene displays a p(FTP) of 0.975. In other words, for Sample # 16, the amount of flame retardancy per unit of the flame retarding composition is 0.043/3 = 0.0143, where the 3 is the weight percent of the flame retardancy composition. In contrast, the Sample # 18 has produces a flame retardancy of 0.975/5 = 0.195 per unit of flame retardant. This represents a 450% improvement and is clearly reflective of a synergy.

Table 13 reflects the properties of the composition when a flame retardant synergist such as a mineral filler is added to the flame retardant polycarbonate composition. Table 13 reflects compositions having ingredients similar those in Table 11. The polycarbonate composition comprises linear polycarbonate along with the polysiloxane-polycarbonate copolymer.

The properties from the Table 13 are shown in the Tables 14 and 15. Table 14 depicts the mechanical properties, while Table 15 depicts the flame retardant properties. From the Tables 14 and 15, it may be seen that the addition of talc along with 5 to 7 wt% of the phenoxyphosphazene compound improves the flame retardancy. The flame retardant compositions display a UL 94-V0 rating at 1.5 millimeter thickness; and also pass UL 94-V0 rating at 2.0 millimeter thickness.

**Table 13**

| Item Description | Unit | Sample # 22 | Sample # 23 | Sample # 24 | Sample # 25 | Sample # 26 | Sample # 27 | Sample # 28 |
|---|---|---|---|---|---|---|---|---|
| PCP 1300 | % | 18.2 | 24.2 | 21.2 | 15.4 | 12.45 | 18.8 | 19.21 |
| 100 GRADE PCP | % | 36.29 | 48.29 | 41.89 | 30.69 | 24.9 | 26.29 | 36.29 |
| THPE Branched PC Resin | % | | | | | | 10 | |
| 20% PC/SILOXANE COPOLYMER,PCP ENDCAPPED | % | 9.1 | 11.1 | 10.5 | 7.5 | 6.24 | 9.1 | 9.1 |
| SAN encapsulated PTFE - intermediate resin | % | 0.6 | 0.6 | 0.6 | 0.6 | 0.6 | | 0.6 |
| Pentaerythritol tetrastearate | % | 0.6 | 0.6 | 0.6 | 0.6 | 0.6 | 0.6 | 0.6 |
| Hindered Phenol anti-oxidant | % | 0.1 | 0.1 | 0.1 | 0.1 | 0.1 | 0.1 | 0.1 |
| Phosophite stabilizer | % | 0.1 | 0.1 | 0.1 | 0.1 | 0.1 | 0.1 | 0.1 |
| HS-T0.5 (talc) | % | 1 | 1 | 1 | 1 | 1 | 1 | |
| PhenoxyPhosphazene | % | 4 | 4 | 4 | 4 | 4 | 4 | 4 |
| Phosphorous Acid 45 % | % | 0.01 | 0.01 | 0.01 | 0.01 | 0.01 | 0.01 | |
| Nittobo, CSG 3PA-830, flat fiber | % | 30 | 10 | 20 | 40 | 50 | 30 | 30 |

**Table 14**

| Typical Properties | Test Method | Units | Sample # 22 | Sample # 23 | Sample # 24 | Sample # 25 | Sample # 26 | Sampl e # 27 | Sample # 28 |
|---|---|---|---|---|---|---|---|---|---|
| Notched IZOD, | ASTM D256 | J/m | 107 | 142 | 116 | 112 | 112 | 108 | 160 |
| Unnotched IZOD | ASTM D256 | J/m | 424 | 676 | 495 | 531 | 407 | 420 | 576 |
| HDT | ASTM D648 | °C | 126 | 129 | 128 | 124 | 121 | 126 | 128 |
| MFR | ASTM D1238 | g/10min | 9.56 | 8.23 | 8.05 | 9.71 | 10.6 | 7.76 | 10.2 |
| Tensile Modulus | ASTM D638 | MPa | 9251.4 | 4288 | 6730.8 | 12079.8 | 15877.8 | 9315.8 | 9233.2 |
| Tensile Strength | ASTM D638 | MPa | 115.6 | 76.4 | 98.4 | 134.4 | 148.6 | 117 | 126.4 |
| Tensile Elongation | ASTM D638 | % | 2.3 | 3 | 2.6 | 2.1 | 1.9 | 2.3 | 2.6 |
| Flexural Modulus | ASTM D790 | MPa | 7430 | 3990 | 5400 | 9720 | 12900 | 7400 | 7390 |
| Flexural Strength | ASTM D790 | MPa | 160 | 125 | 140 | 180 | 207 | 155 | 181 |
| Mw | | Daltons | 52058 | 54407 | 53451 | 49811 | 46774 | 54595 | 50522 |

**Table 15**

| Test | Test Standard | Sample # 22 | Sample # 23 | Sample # 24 | Sample # 25 | Sample # 26 | Sample # 27 | Sample # 28 |
|---|---|---|---|---|---|---|---|---|
| Flame regardancy | UL94 | V-0 @ 1.2mm | V-0@ 1.2mm | V-0@ 1.2mm | V-0@ 1.2mm | V-0@ 1.2mm | V-0@ 1.5mm | V-0@ 1.5mm |
| p(FTP) @0.8mm, normal | UL94 | 0.000 | 0.007 | 0.005 | 0.233 | 0.063 | 0.040 | 0.001 |
| p(FTP) @0.8mm, aging | UL94 | 0.009 | 0.420 | 0.000 | 0.480 | 0.271 | 0.442 | 0.015 |
| p(FTP) @1.0mm, normal | UL94 | 0.482 | 0.053 | 0.496 | 0.763 | 0.776 | 0.351 | 0.068 |
| p(FTP) @1.0mm, aging | UL94 | 0.378 | 0.978 | 0.009 | 0.158 | 0.396 | 0.003 | 0.001 |
| p(FTP) @1.2mm, normal | UL94 | 0.857 | 1.000 | 0.976 | 0.920 | 0.953 | 0.575 | 0.003 |
| p(FTP) @1.2mm, aging | UL94 | 0.699 | 0.965 | 0.923 | 0.304 | 0.462 | 0.523 | 0.084 |
| p(FTP) @1.5mm, normal | UL94 | 1.000 | 0.988 | 1.000 | 0.956 | 0.992 | 0.500 | 0.567 |
| p(FTP) @1.5mm, aging | UL94 | 0.970 | 1.000 | 1.000 | 0.938 | 0.953 | 0.795 | 0.739 |
| p(FTP) @2.0mm, normal | UL94 | 0.996 | 0.986 | 1.000 | 0.999 | 1.000 | 1.000 | 0.989 |
| p(FTP) @2.0mm, aging | UL94 | 0.999 | 0.974 | 1.000 | 1.000 | 0.985 | 0.976 | 1.000 |

Table 16 depicts examples having 30% glass fiber, 5 to 7% SPB-100, with or without the polysiloxane-carbonate copolymer. The compositions show that a flame retardancy of V-0 at a sample thickness of 0.8 to 1.4 mm could be achieved while still maintaining and impact strength of greater than or equal to 100 Joules per meter. The higher the amount of phenoxyphosphazene, the more robust flame retardancy.

**Table 16**

| | | | Comparative | | | | | |
|---|---|---|---|---|---|---|---|---|
| Item Description | | Unit of Meas. | 1# | 2# | 3# | 4# | 5# | 6# |
| Polycarbonate (PC1 + PC2) | | wt% | 54.6 | 53.6 | 56.6 | 62.6 | 55.6 | 61.6 |
| Nittobo flat fiber | | wt% | 30 | 30 | 30 | 30 | 30 | 30 |
| Phosphazene | | wt% | 5 | 6 | 6 | 6 | 7 | 7 |
| SAN-PTFE | | wt% | 0.6 | 0.6 | 0.6 | 0.6 | 0.6 | 0.6 |
| PC-Siloxane copolymer | | wt% | 9 | 9 | 6 | | 6 | |
| anti-oxidant, mold release agent, stabilizer | | wt% | 0.8 | 0.8 | 0.8 | 0.8 | 0.8 | 0.8 |

| Typical Properties | Test Method | Units | 1# | 2# | 3# | 4# | 5# | 6# |
|---|---|---|---|---|---|---|---|---|
| N-IZOD | ASTM D256 | J/m | 156 | 154 | 167 | 135 | 170 | 130 |
| U-IZOD | ASTM D256 | J/m | 616 | 509 | 629 | 747 | 693 | 699 |
| N-Charpy | ISO179 | kJ/m2 | \ | \ | 14.57 | 10.91 | 13.38 | 10.89 |
| U-Charpy | ISO179 | kJ/m2 | \ | \ | 40.68 | 38.15 | 40.94 | 37.6 |
| HDT | ASTM D648 | °C | 123 | 120 | 121 | 121 | 118 | 118 |
| MFR | ASTM D1238 | g/10min | 9.66 | 8.7 | 11.8 | 12.8 | 11.8 | 13.6 |
| Flame Retardancy | UL 94 | | V-0 @ 1.4m m | V-0 @ 0.8mm | V-0 @ 0.8mm | V-0 @ 1.0mm | V-0 @0.8mm | V-0 @ 0.8mm |

Tables 13, 14, 15 and 16 show that when a mineral filler is used in the flame retardant compositions in conjunction with the polycarbonate copolymers and the phenoxyphosphazene compound, the flame retardant polycarbonate composition shows a flame retardancy of V-1 when measured under UL-94 standards.

The compositions of the Tables 11 and 13 clearly show that flame retardant polycarbonate compositions comprising a polycarbonate composition, talc and phenoxyphosphazene display first time probabilities of achieving V-0 as per UL-94 of greater than 90%, specifically greater than 92%, specifically greater than 94%, specifically greater than 95%, specifically greater than 97%, specifically greater than 98% and more specifically greater than 99% at a thickness of greater than or equal to 1.2 mm, specifically greater than or equal to 1.5 mm, and more specifically greater than or equal to 2.0 mm.

In one embodiment, the flame retardant polycarbonate compositions comprising a polycarbonate composition, talc and phenoxyphosphazene display first time probabilities of achieving V-1 as per UL-94 of greater than 90%, specifically greater than 92%, specifically greater than 94%, specifically greater than 95%, specifically greater than 97%, specifically greater than 98% and more specifically greater than 99% at a thickness of greater than or equal to 1.2 mm, specifically greater than or equal to 1.5 mm, and more specifically greater than or equal to 2.0 mm.

In another embodiment, the flame retardant polycarbonate compositions comprising a polycarbonate composition, talc and phenoxyphosphazene display first time probabilities of achieving V-2 as per UL-94 of greater than 90%, specifically greater than 92%, specifically greater than 94%, specifically greater than 95%, specifically greater than 97%, specifically greater than 98% and more specifically greater than 99% at a thickness of greater than or equal to 1.2 mm, specifically greater than or equal to 1.5 mm, and more specifically greater than or equal to 2.0 mm.

From the Tables 13 - 15, it may be seen that the flame retardant compositions have a notched Izod impact strength of 100 to 140 Joules/meter (J/m), specifically 105 to 135 J/m, and more specifically 110 to 125 J/m when measured as per ASTM D256. From the Tables 13 - 15, it may also be seen that the flame retardant compositions do not undergo any significant reduction in the heat distortion temperature upon the introduction of the flame retardant phosphazene compound. The heat distortion temperature of the flame retardant compositions is 100 to 140°C, specifically 110 to 135°C, and more specifically 115 to 130°C, when measured as per ASTM D648.

As seen from the Tables 13 - 15 above, melt volume flow rate (abbreviated as "MVR") measures the rate of extrusion of a thermoplastic through an orifice at a prescribed temperature and load. The flame retardant polycarbonate compositions can have an MVR, measured at 300°C under a load of 2.16 kg, of 7 to 40 cubic centimeters per 10 minutes (cm³/10 min), specifically 8 to 20 cm³/10 min, specifically 9 to 11 cm³/10 min, and more specifically 18 to 28 cm3/10 min. MVR was measured according to ASTM D 1238.

From the Tables 12, 14 and 15 it may also be seen that when the flame retardant composition comprises phosphazene and a mineral filler as the synergist, the probability of a first time pass p(FTP) for achieving V-0 at 1.2 millimeter sample thickness as per the UL-94 standard is at least 0.10 to 0.198, specifically 0.12 to 0.196, and more specifically 0.185 to 0.197 per unit weight of the flame retardant composition as compared with a p(FTP) of 0 per unit weight of talc (for a sample containing all of the same ingredients (including talc) but without the phosphazene) and a p(FTP) of 0.001 to 0.002 per unit weight of phosphazene (for a sample containing all of the same ingredients (including the phosphazene) but without the talc). This result clearly shows a synergy for a combination of a mineral filler with the phosphazene in a polycarbonate composition.

The composition disclosed herein may be advantageously used to manufacture a variety of different articles such as computer housings, housings for electronic goods such as televisions, cell phones, tablet computers, automotive parts such as interior body panels, parts for aircraft, and the like.

In summary, disclosed herein is a flame retardant polycarbonate composition comprising 10 to 90 weight percent of a polycarbonate composition that comprises a polycarbonate; 5 to 60 weight percent of a reinforcing filler; where the reinforcing filler is a glass fiber, a carbon fiber, a metal fiber, or a combination comprising at least one of the foregoing reinforcing fillers; a phosphazene compound, and a flame retardant synergist, where the flame retardant synergist is a mineral filler, where the mineral filler is talc, calcium carbonate, dolomite, wollastonite, barium sulfate, silica, kaolin, feldspar, or a combination comprising at least one of the foregoing mineral fillers. In one embodiment, the polycarbonate comprises a linear polycarbonate homopolymer, a branched polycarbonate homopolymer, or a combination of a linear polycarbonate homopolymer and a branched polycarbonate homopolymer; and where the polycarbonate is present in an amount of 40 to 80 weight percent, based on the total weight of the flame retardant polycarbonate composition. Alternatively, the polycarbonate composition comprises a copolyestercarbonate copolymer that comprises a polyester having repeat units derived from sebacic acid and a dihydroxy compound. The polycarbonate composition further comprises a polysiloxane-carbonate copolymer that comprises 15 to 25 weight percent polysiloxane. The phosphazene compound is present in an amount of 2 to 20 weight percent and a flame retardant synergist is present in an amount of 0.5 to 10 weight percent, based on the total weight of the flame retardant composition. The flame retardant polycarbonate composition can comprise glass fiber is a flat glass fiber, round glass, rectangular glass, glass with an irregular cross-section, long filament or chopped glass. The flame retardant composition comprises a flame retardancy of V-0, V-1, V-2, or 5VA at a sample thickness of 0.6 to 3.0 millimeters when tested per a UL-94 protocol; and a melt volume rate of 5 to 60 cubic centimeters per 10 minutes when measured as per ASTM D1238 at a temperature of 300°C and a force of 2.16 kilograms..

In another embodiment, disclosed herein is a flame retardant polycarbonate composition comprising 10 to 90 weight percent of a polycarbonate composition that comprises a polycarbonate; 5 to 60 weight percent of a reinforcing filler; where the reinforcing filler is a glass fiber, a carbon fiber, a metal fiber, or a combination comprising at least one of the foregoing reinforcing fillers; a phosphazene compound; and a flame retardant synergist, where the flame retardant synergist is a mineral filler, where the mineral filler is talc, calcium carbonate, dolomite, wollastonite, barium sulfate, silica, kaolin, feldspar, or a combination comprising at least one of the foregoing mineral fillers. In one embodiment, the polycarbonate comprises a linear polycarbonate homopolymer, a branched polycarbonate homopolymer, or a combination of a linear polycarbonate homopolymer and a branched polycarbonate homopolymer; and where the polycarbonate is present in an amount of 40 to 80 weight percent, based on the total weight of the flame retardant polycarbonate composition. Alternatively, the polycarbonate composition comprises a copolyestercarbonate copolymer that comprises a polyester having repeat units derived from sebacic acid and a dihydroxy compound. The copolyestercarbonate copolymer comprises a first copolyestercarbonate copolymer that comprises a polyester that is copolymerized with a polycarbonate, where the polyester is derived from a reaction between sebacic acid and bisphenol A and the polycarbonate is derived from a reaction between bisphenol A and phosgene; and where the first copolyestercarbonate copolymer comprises 3 to 15 mole percent of a polyester derived from sebacic acid; and where the first copolyestercarbonate copolymer has a weight average molecular weight of 15,000 to 25,000 Daltons. The copolyestercarbonate copolymer also comprises a second copolyestercarbonate copolymer that is endcapped with paracumyl phenol and comprises 7 to 12 mole percent of a polyester derived from sebacic acid; and where the second copolyestercarbonate copolymer has a weight average molecular weight of 30,000 to 45,000 Daltons. The polycarbonate composition further comprises a polysiloxane-carbonate copolymer that comprises 15 to 25 weight percent polysiloxane. The phosphazene compound is present in an amount of 2 to 20 weight percent and a flame retardant synergist is present in an amount of 0.5 to 10 weight percent, based on the total weight of the flame retardant composition. The phosphazene compound has the structure: 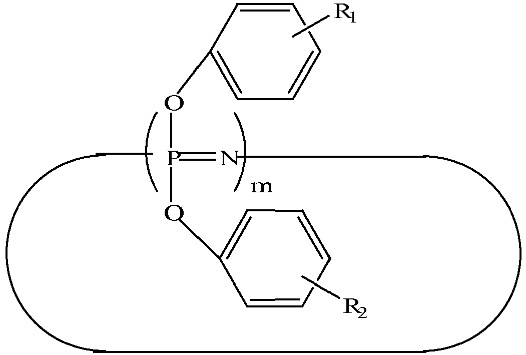 where m represents an integer of 3 to 25, R₁ and R₂ are the same or different and are independently a hydrogen, a hydroxyl, a C₇₋₃₀ aryl group, a C₁₋₁₂ alkoxy, or a C₁₋₁₂ alkyl or the structure 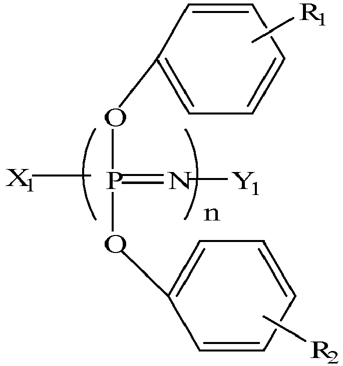 where X¹ represents a -N=P(OPh)₃ group or a -N=P(O)OPh group, Y¹ represents a -P(OPh)₄ group or a -P(O) (OPh)₂ group, Ph represents a phenyl group, n represents an integer from 3 to 10000, R₁ and R₂ are the same or different and are independently a hydrogen, a hydroxyl, a C₇₋₃₀ aryl, a C₁₋₁₂ alkoxy, or a C₁₋₁₂ alkyl. In one embodiment, the phosphazene compound is phenoxy cyclotriphosphazene, octaphenoxy cyclotetraphosphazene, decaphenoxy cyclopentaphosphazene, or a combination comprising at least one of the foregoing phosphazene compounds. In one embodiment, the phosphazene compound is a crosslinked phenoxyphosphazene. The flame retardant polycarbonate composition can comprise glass fiber is a flat glass fiber, round glass, rectangular glass, glass with an irregular cross-section, long filament or chopped glass. The flame retardant composition comprises a flame retardancy of V-0, V-1, V-2, or 5VA at a sample thickness of 0.6 to 3.0 millimeters when tested per a UL-94 protocol; and a melt volume rate of 5 to 60 cubic centimeters per 10 minutes when measured as per ASTM D1238 at a temperature of 300°C and a force of 2.16 kilograms.

Disclosed herein too is a flame retardant polycarbonate composition comprising 10 to 90 weight percent of a polycarbonate composition that comprises a polycarbonate; 5 to 60 weight percent of a reinforcing filler; where the reinforcing filler is a glass fiber, a carbon fiber, a metal fiber, or a combination comprising at least one of the foregoing reinforcing fillers; a phosphazene compound; and a flame retardant synergist, where the flame retardant synergist is a mineral filler, where the mineral filler is talc, calcium carbonate, dolomite, wollastonite, barium sulfate, silica, kaolin, feldspar, or a combination comprising at least one of the foregoing mineral fillers. In one embodiment, the polycarbonate comprises a linear polycarbonate homopolymer, a branched polycarbonate homopolymer, or a combination of a linear polycarbonate homopolymer and a branched polycarbonate homopolymer; and where the polycarbonate is present in an amount of 40 to 80 weight percent, based on the total weight of the flame retardant polycarbonate composition. Alternatively, the polycarbonate composition comprises a copolyestercarbonate copolymer that comprises a polyester having repeat units derived from sebacic acid and a dihydroxy compound. The polycarbonate composition further comprises a polysiloxane-carbonate copolymer that comprises 15 to 25 weight percent polysiloxane. The phosphazene compound is present in an amount of 2 to 20 weight percent and a flame retardant synergist is present in an amount of 0.5 to 10 weight percent, based on the total weight of the flame retardant composition. In an embodiment, the phosphazene compound has a structure: 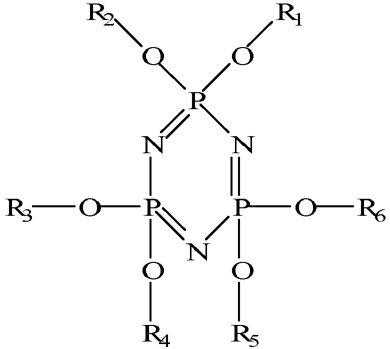 where R₁ to R₆ can be the same of different and can be an aryl group, an aralkyl group, a C₁₋₁₂ alkoxy, a C₁₋₁₂ alkyl, or a combination thereof. In another embodiment, the phosphazene compound has a structure:

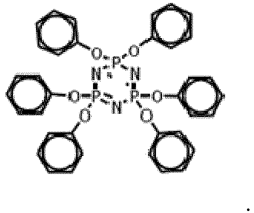

The flame retardant polycarbonate composition can comprise glass fiber is a flat glass fiber, round glass, rectangular glass, glass with an irregular cross-section, long filament or chopped glass. The flame retardant synergist is a mineral filler; where the mineral filler is mica, talc, calcium carbonate, dolomite, wollastonite, barium sulfate, silica, kaolin, feldspar, or a combination comprising at least one of the foregoing mineral fillers. The flame retardant composition comprises a flame retardancy of V-0, V-1, V-2, or 5VA at a sample thickness of 0.6 to 3.0 millimeters when tested per a UL-94 protocol; and a melt volume rate of 5 to 60 cubic centimeters per 10 minutes when measured as per ASTM D1238 at a temperature of 300°C and a force of 2.16 kilograms.

The method of forming a flame retardant composition comprises blending 10 to 90 weight percent of a polycarbonate composition that comprises repeat units derived from sebacic acid and bisphenol A; 5 to 60 weight percent of a reinforcing filler; where the reinforcing filler is a glass fiber, a carbon fiber, a metal fiber, or a combination comprising at least one of the foregoing reinforcing fillers; and a flame retardant composition that comprises a phosphazene compound and a flame retardant synergist, where the flame retardant synergist is a mineral filler, where the mineral filler is talc, calcium carbonate, dolomite, wollastonite, barium sulfate, silica, kaolin, feldspar, or a combination comprising at least one of the foregoing mineral fillers; where the flame retardant composition is effective to deliver to the flame retardant polycarbonate composition a probability of a first time pass of 0.10 to 0.199 per unit weight of the flame retardant composition at a sample thickness of at least 1.2 millimeters when tested as per the UL-94 protocol; and extruding the flame retardant composition. The composition further comprises molding the composition.

The flame retardant polycarbonate composition also comprises 10 to 90 weight percent of a polycarbonate composition that comprises a polycarbonate homopolymer and a polysiloxane-polycarbonate copolymer;5 to 60 weight percent of a reinforcing filler; where the reinforcing filler is a glass fiber, a carbon fiber, a metal fiber, or a combination comprising at least one of the foregoing reinforcing fillers; and a flame retardant composition that comprises a phosphazene compound and a flame retardant synergist, where the flame retardant synergist is a mineral filler, where the mineral filler is talc, calcium carbonate, dolomite, wollastonite, barium sulfate, silica, kaolin, feldspar, or a combination comprising at least one of the foregoing mineral fillers, and where the flame retardant composition is effective to deliver to the flame retardant polycarbonate composition a probability of a first time pass of 0.10 to 0.199 per unit weight of the flame retardant composition at a thickness of at least 1.2 millimeters when tested as per the UL-94 protocol; where the flame retardant composition comprises 2 to 20 weight percent of a phosphazene compound and 0.5 to 10 weight percent of a flame retardant synergist. The polycarbonate composition can comprise a linear polycarbonate, a branched polycarbonate, or a combination of a linear polycarbonate and .a branched polycarbonate. The glass fiber is a flat glass fiber. The flame retardant synergist is talc having an average particle size of 1 to 3 micrometers. The flame retardant polycarbonate composition displays a flame retardancy of V-0 at a sample thickness of at least 1.2 millimeters when tested per a UL-94 protocol. The flame retardant composition also comprises a flame retardancy of at least V-0 at a thickness of 1.2 millimeters when measured as per the UL-94 protocol and a melt viscosity of 15 to 30 cubic centimeters per 10 minutes when measured as per ASTM D1238 at a temperature of 300°C and a force of 2.16 kilograms. The phosphazene compound has the structure: 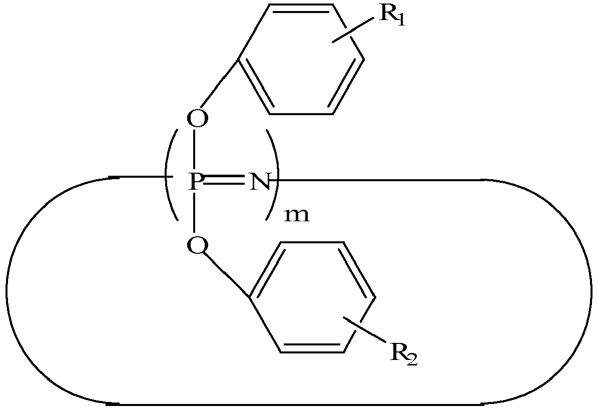 where m represents an integer of 3 to 25, R₁ and R₂ are the same or different and are independently a hydrogen, a hydroxyl, a C₇₋₃₀ aryl group, a C₁₋₁₂ alkoxy, or a C₁₋₁₂ alkyl. The phosphazene compound is phenoxy cyclotriphosphazene, octaphenoxy cyclotetraphosphazene, decaphenoxy cyclopentaphosphazene, or a combination comprising at least one of the foregoing phosphazene compounds. The phosphazene compound can also have the structure: 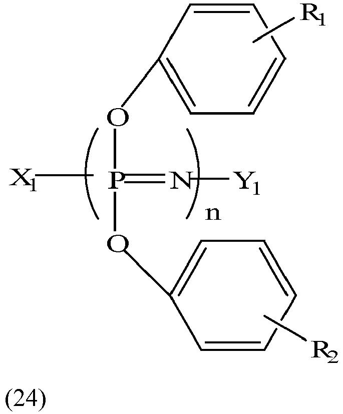 where in the formula (24), X¹ represents a -N=P(OPh)₃ group or a -N=P(O)OPh group, Y¹ represents a -P(OPh)₄ group or a -P(O) (OPh)₂ group, Ph represents a phenyl group, n represents an integer from 3 to 10000, R₁ and R₂ are the same or different and are independently a hydrogen, a hydroxyl, a C₇₋₃₀ aryl, a C₁₋₁₂ alkoxy, or a C₁₋₁₂ alkyl. The phosphazene compound is a crosslinked phenoxyphosphazene. The phosphazene compound has a structure: 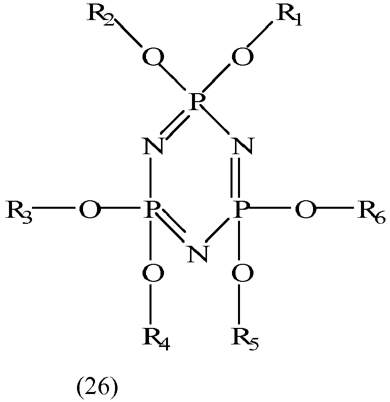 where R₁ to R₆ can be the same of different and can be an aryl group, an aralkyl group, a C₁₋₁₂ alkoxy, a C₁₋₁₂ alkyl, or a combination thereof. The phosphazene compound has a structure:

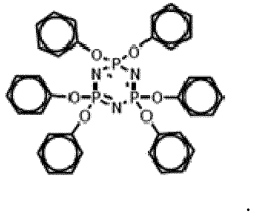

In one embodiment, the flame retardant polycarbonate composition also comprises 40 to 60 weight percent of a polycarbonate composition that comprises a polycarbonate homopolymer and a polysiloxane-polycarbonate copolymer;5 to 60 weight percent of a reinforcing filler; where the reinforcing filler is a glass fiber, a carbon fiber, a metal fiber, or a combination comprising at least one of the foregoing reinforcing fillers; and a flame retardant composition that comprises a phosphazene compound and a flame retardant synergist, where the flame retardant synergist is a mineral filler, where the mineral filler is talc, calcium carbonate, dolomite, wollastonite, barium sulfate, silica, kaolin, feldspar, or a combination comprising at least one of the foregoing mineral fillers, where the flame retardant composition is effective to deliver to the flame retardant polycarbonate composition a probability of a first time pass of 0.10 to 0.199 per unit weight of the flame retardant composition at a thickness of at least 1.2 millimeters when tested as per the UL-94 protocol; where the flame retardant composition comprises 2 to 20 weight percent of a phosphazene compound and 0.5 to 10 weight percent of a flame retardant synergist. The polycarbonate composition can comprise a linear polycarbonate, a branched polycarbonate, or a combination of a linear polycarbonate and .a branched polycarbonate. The polysiloxane-polycarbonate copolymer is present in an amount of 5 to 20 wt%, based on a total weight of the flame retardant polycarbonate composition, and where the polysiloxane-polycarbonate copolymer comprises 15 to 25 wt% of polysiloxane. The phosphazene compound has the structure: 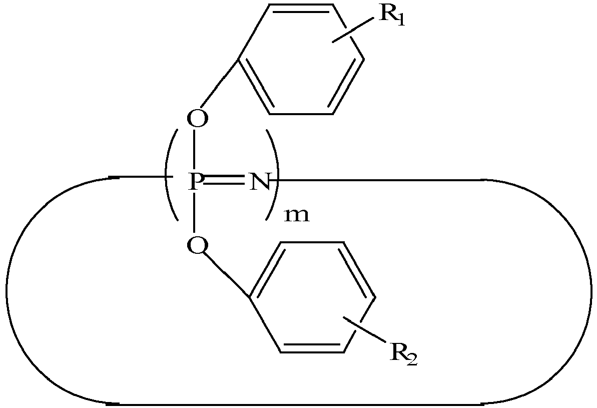 where m represents an integer of 3 to 25, R₁ and R₂ are the same or different and are independently a hydrogen, a hydroxyl, a C₇₋₃₀ aryl group, a C₁₋₁₂ alkoxy, or a C₁₋₁₂ alkyl. The phosphazene compound is phenoxy cyclotriphosphazene, octaphenoxy cyclotetraphosphazene, decaphenoxy cyclopentaphosphazene, or a combination comprising at least one of the foregoing phosphazene compounds. The phosphazene compound can also have the structure: 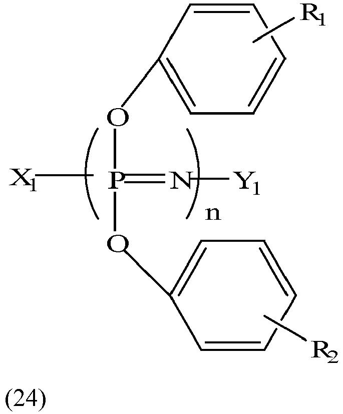 where in the formula (24), X¹ represents a -N=P(OPh)₃ group or a -N=P(O)OPh group, Y¹ represents a -P(OPh)₄ group or a -P(O) (OPh)₂ group, Ph represents a phenyl group, n represents an integer from 3 to 10000, R₁ and R₂ are the same or different and are independently a hydrogen, a hydroxyl, a C₇₋₃₀ aryl, a C₁₋₁₂ alkoxy, or a C₁₋₁₂ alkyl. The phosphazene compound is a crosslinked phenoxyphosphazene. The phosphazene compound has a structure: 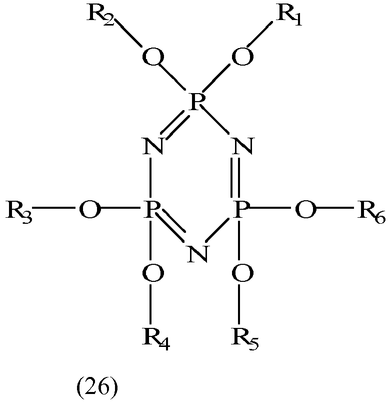 where R₁ to R₆ can be the same of different and can be an aryl group, an aralkyl group, a C₁₋₁₂ alkoxy, a C₁₋₁₂ alkyl, or a combination thereof. The phosphazene compound has a structure:

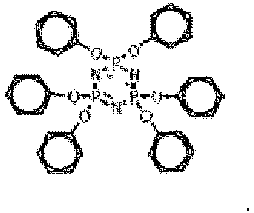

The glass fiber is a flat glass fiber. The flame retardant synergist is talc having an average particle size of 1 to 3 micrometers. The flame retardant polycarbonate composition displays a flame retardancy of V-0 at a sample thickness of at least 1.2 millimeters when tested per a UL-94 protocol. The flame retardant composition also comprises a flame retardancy of at least V-0 at a thickness of 1.2 millimeters when measured as per the UL-94 protocol and a melt viscosity of 15 to 30 cubic centimeters per 10 minutes when measured as per ASTM D1238 at a temperature of 300°C and a force of 2.16 kilograms.

The method comprises blending 10 to 90 weight percent of a polycarbonate composition that comprises a polycarbonate homopolymer and a polysiloxane-polycarbonate copolymer; 5 to 60 weight percent of a reinforcing filler; where the reinforcing filler is a glass fiber, a carbon fiber, a metal fiber, or a combination comprising at least one of the foregoing reinforcing fillers; and a flame retardant composition that comprises a phosphazene compound and a flame retardant synergist, where the flame retardant synergist is a mineral filler, where the mineral filler is talc, calcium carbonate, dolomite, wollastonite, barium sulfate, silica, kaolin, feldspar, or a combination comprising at least one of the foregoing mineral fillers, and where the flame retardant composition is effective to deliver to the flame retardant polycarbonate composition a probability of a first time pass of 0.10 to 0.199 per unit weight of the flame retardant composition at a thickness of at least 1.2 millimeters when tested as per the UL-94 protocol; extruding the flame retardant composition, and optionally molding the composition.

The method comprises blending 10 to 90 weight percent of a polycarbonate composition that comprises a polycarbonate homopolymer and a polysiloxane-polycarbonate copolymer; 5 to 60 weight percent of a reinforcing filler; where the reinforcing filler is a glass fiber, a carbon fiber, a metal fiber, or a combination comprising at least one of the foregoing reinforcing fillers; and a flame retardant composition that comprises a phosphazene compound and a flame retardant synergist, where the flame retardant synergist is a mineral filler, where the mineral filler is talc, calcium carbonate, dolomite, wollastonite, barium sulfate, silica, kaolin, feldspar, or a combination comprising at least one of the foregoing mineral fillers, where the flame retardant composition is effective to deliver to the flame retardant polycarbonate composition a probability of a first time pass of 0.10 to 0.199 per unit weight of the flame retardant composition at a thickness of at least 1.2 millimeters when tested as per the UL-94 protocol; and extruding the flame retardant composition; and molding the composition. It is to be noted that all ranges detailed herein include the endpoints. Numerical values from different ranges are combinable.

The transition term comprising encompasses the transition terms "consisting of' and "consisting essentially of'.

The term "and/or" includes both "and" as well as "or". For example, "A and/or B" is interpreted to be A, B, or A and B.

## Claims

1. A flame retardant polycarbonate composition comprising:
10 to 90 weight percent of a polycarbonate composition that comprises a polycarbonate;
5 to 60 weight percent of a reinforcing filler; where the reinforcing filler is a glass fiber, a carbon fiber, a metal fiber, or a combination comprising at least one of the foregoing reinforcing fillers;
a phosphazene compound; and
a flame retardant synergist, where the flame retardant synergist is a mineral filler, where the mineral filler is talc, calcium carbonate, dolomite, wollastonite, barium sulfate, silica, kaolin, feldspar, or a combination comprising at least one of the foregoing mineral fillers.

2. The flame retardant polycarbonate composition of Claim 1, where the polycarbonate comprises a linear polycarbonate homopolymer, a branched polycarbonate homopolymer, or a combination of a linear polycarbonate homopolymer and a branched polycarbonate homopolymer; and where the polycarbonate is present in an amount of 40 to 80 weight percent, based on the total weight of the flame retardant polycarbonate composition.

3. The flame retardant polycarbonate composition of any one of Claims 1 through 2, where the polycarbonate composition comprises a copolyestercarbonate copolymer that comprises a polyester having repeat units derived from sebacic acid and a dihydroxy compound.

4. The flame retardant polycarbonate composition of any one of Claims 1 through 3, where the polycarbonate composition further comprises a polysiloxane-carbonate copolymer that comprises 15 to 25 weight percent polysiloxane.

5. The flame retardant polycarbonate composition of any one of Claims 1 through 4, where the flame retardant composition comprises 2 to 20 weight percent of the phosphazene compound and 0.5 to 10 weight percent of the flame retardant synergist.

6. The flame retardant polycarbonate composition of Claim 3, where the copolyestercarbonate copolymer comprises a first copolyestercarbonate copolymer that comprises a polyester that is copolymerized with a polycarbonate, where the polyester is derived from a reaction between sebacic acid and bisphenol A and the polycarbonate is derived from a reaction between bisphenol A and phosgene; and where the first copolyestercarbonate copolymer comprises 3 to 15 mole percent of a polyester derived from sebacic acid; and where the first copolyestercarbonate copolymer has a weight average molecular weight of 15,000 to 25,000 Daltons.

7. The flame retardant polycarbonate composition of Claim 6, further comprising a second copolyestercarbonate copolymer that is endcapped with paracumyl phenol and comprises 7 to 12 mole percent of a polyester derived from sebacic acid; and where the second copolyestercarbonate copolymer has a weight average molecular weight of 30,000 to 45,000 Daltons.

8. The flame retardant polycarbonate composition of any one of Claims 1 through 7, where the phosphazene compound has the structure: 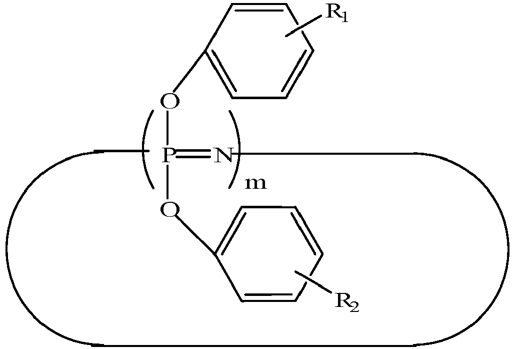 where m represents an integer of 3 to 25, R₁ and R₂ are the same or different and are independently a hydrogen, a hydroxyl, a C₇₋₃₀ aryl group, a C₁₋₁₂ alkoxy, or a C₁₋₁₂ alkyl; or
where the phosphazene compound has the structure: 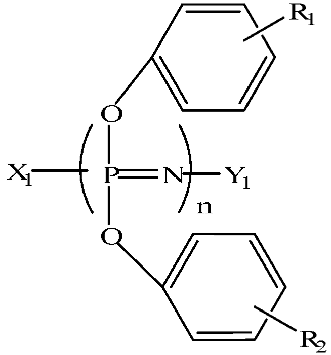 where X¹ represents a -N=P(OPh)₃ group or a -N=P(O)OPh group, Y¹ represents a - P(OPh)₄ group or a -P(O) (OPh)₂ group, Ph represents a phenyl group, n represents an integer from 3 to 10000, R₁ and R₂ are the same or different and are independently a hydrogen, a hydroxyl, a C₇₋₃₀ aryl, a C₁₋₁₂ alkoxy, or a C₁₋₁₂ alkyl; or
where the phosphazene compound has a structure: 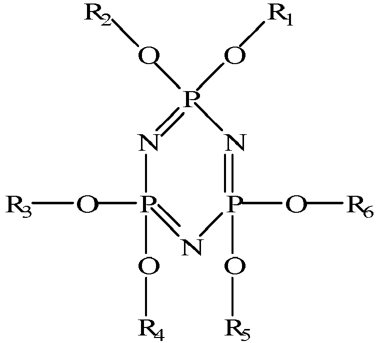 where R₁ to R₆ can be the same of different and can be an aryl group, an aralkyl group, a C₁₋₁₂ alkoxy, a C₁₋₁₂ alkyl, or a combination thereof; or
where the phosphazene compound has a structure:

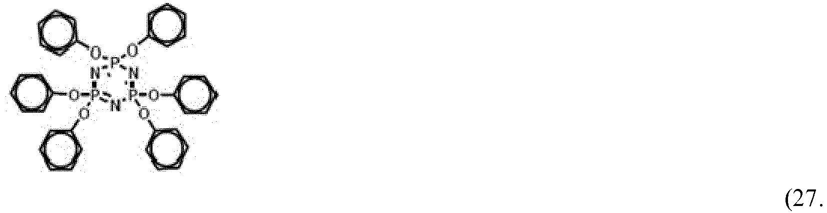

9. The flame retardant polycarbonate composition of any one of Claims 1 through 7, where the phosphazene compound is hexaphenoxy cyclotriphosphazene, octaphenoxy cyclotetraphosphazene, decaphenoxy cyclopentaphosphazene, or a combination comprising at least one of the foregoing phosphazene compounds.

10. The flame retardant polycarbonate composition of any one of Claims 1 through 7, where the phosphazene compound is a crosslinked phenoxyphosphazene.

11. The flame retardant polycarbonate composition of any one of Claims 1 through 10, where the glass fiber is a flat glass fiber, round glass, rectangular glass, glass with an irregular cross-section, long filament or chopped glass.

12. The flame retardant polycarbonate composition of Claim 5, where the flame retardant synergist is talc.

13. The flame retardant polycarbonate composition of any one of Claims 1 through 12, displaying a flame retardancy of V-0, V-1, V-2, or 5VA at a sample thickness of 0.6 to 3.0 millimeters when tested per a UL-94 protocol; and a melt volume rate of 5 to 60 cubic centimeters per 10 minutes when measured as per ASTM D1238 at a temperature of 300°C and a force of 2.16 kilograms.

14. An article manufactured from the composition of any one of Claims 1 through 13.

15. A method comprising:
blending 10 to 90 weight percent of a polycarbonate composition that comprises repeat units derived from sebacic acid and bisphenol A; 5 to 60 weight percent of a reinforcing filler; where the reinforcing filler is a glass fiber, a carbon fiber, a metal fiber, or a combination comprising at least one of the foregoing reinforcing fillers; and a flame retardant composition that comprises a phosphazene compound and a flame retardant synergist, where the flame retardant synergist is a mineral filler and where the mineral filler is talc, calcium carbonate, dolomite, wollastonite, barium sulfate, silica, kaolin, feldspar, or a combination comprising at least one of the foregoing mineral fillers; where the flame retardant composition is effective to deliver to the flame retardant polycarbonate composition a probability of a first time pass of 0.10 to 0.199 per unit weight of the flame retardant composition at a sample thickness of at least 1.2 millimeters when tested as per the UL-94 protocol;
extruding the flame retardant composition; and
optionally, molding the composition.

## Patentansprüche

1. Flammhemmende Polycarbonatzusammensetzung, umfassend:
10 bis 90 Gewichtsprozent einer Polycarbonatzusammensetzung, die ein Polycarbonat umfasst;
5 bis 60 Gewichtsprozent eines Verstärkerfüllstoffs; wobei der Verstärkerfüllstoff eine Glasfaser, eine Kohlefaser, eine Metallfaser oder eine Kombination ist, die wenigstens einen der oben genannten Verstärkerfüllstoffe umfasst;
eine Phosphazenverbindung; und
einen flammhemmenden Synergist, wobei der flammhemmende Synergist ein Mineralfüllstoff ist, wobei der Mineralfüllstoff Talk, Calciumcarbonat, Dolomit, Wollastonit, Bariumsulfat, Siliciumdioxid, Kaolin, Feldspat oder eine Kombination ist, die wenigstens einen der oben genannten Mineralfüllstoffe umfasst.

2. Flammhemmende Polycarbonatzusammensetzung nach Anspruch 1, wobei das Polycarbonat ein lineares Polycarbonat-Homopolymer, ein verzweigtes Polycarbonat-Homopolymer oder eine Kombination aus einem linearen Polycarbonat-Homopolymer und einem verzweigten Polycarbonat-Homopolymer ist; und wobei das Polycarbonat in einer Menge von 40 bis 80 Gewichtsprozent, basierend auf dem Gesamtgewicht der flammhemmenden Polycarbonatzusammensetzung, vorhanden ist.

3. Flammhemmende Polycarbonatzusammensetzung nach einem der Ansprüche 1 bis 2, wobei die Polycarbonatzusammensetzung ein Copolyestercarbonat-Copolymer umfasst, das ein Polyester umfasst, das Wiederholungseinheiten aufweist, die von Sebacinsäure und einer Dihydroxyverbindung abgeleitet sind.

4. Flammhemmende Polycarbonatzusammensetzung nach einem der Ansprüche 1 bis 3, wobei die Polycarbonatzusammensetzung ferner ein Polysiloxancarbonat-Copolymer umfasst, das 15 bis 25 Gewichtsprozent Polysiloxan umfasst.

5. Flammhemmende Polycarbonatzusammensetzung nach einem der Ansprüche 1 bis 4, wobei die flammhemmende Zusammensetzung 2 bis 20 Gewichtsprozent der Phosphazenverbindung und 0,5 bis 10 Gewichtsprozent des flammhemmenden Synergists umfasst.

6. Flammhemmende Polycarbonatzusammensetzung nach Anspruch 3, wobei das Copolyestercarbonat-Copolymer ein erstes Copolyestercarbonat-Copolymer umfasst, das ein Polyester umfasst, das mit einem Polycarbonat copolymerisiert ist, wobei das Polyester von einer Reaktion zwischen Sebacinsäure und Bisphenol A abgeleitet ist und das Polycarbonat von einer Reaktion zwischen Bisphenol A und Phosgen abgeleitet ist; und wobei das erste Copolyestercarbonat-Copolymer 3 bis 15 Molprozent eines Polyesters umfasst, das von Sebacinsäure abgeleitet ist; und wobei das erste Copolyestercarbonat-Copolymer ein gewichtsdurchschnittliches Molekulargewicht von 15.000 bis 25.000 Dalton aufweist.

7. Flammhemmende Polycarbonatzusammensetzung nach Anspruch 6, ferner umfassend ein zweites Copolyestercarbonat-Copolymer, das mit Paracumylphenol endgekappt ist und 7 bis 12 Molprozent eines Polyesters umfasst, das von Sebacinsäure abgeleitet ist; und wobei das zweite Copolyestercarbonat-Copolymer ein gewichtsdurchschnittliches Molekulargewicht von 30.000 bis 45.000 Dalton aufweist.

8. Flammhemmende Polycarbonatzusammensetzung nach einem der Ansprüche 1 bis 7, wobei die Phosphazenverbindung die Struktur wie folgt aufweist: 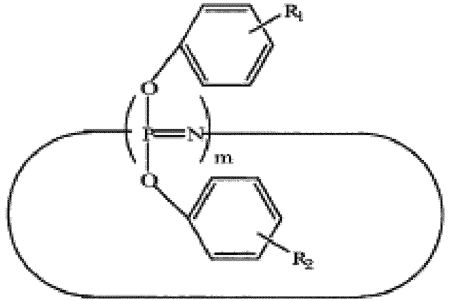 wobei m eine Ganzzahl von 3 bis 25 repräsentiert, R₁ und R₂ gleich oder verschieden sind und unabhängig ein Wasserstoff, ein Hydroxyl, eine C₇₋₃₀-Arylgruppe, ein C₁₋₁₂-Alkoxy oder ein C₁₋₁₂-Alkyl sind; oder
wobei die Phosphazenverbindung die Struktur wie folgt aufweist: 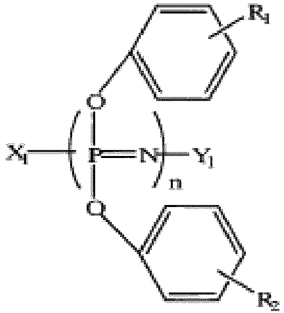 wobei X¹ eine -N=P(OPh)₃-Gruppe oder eine -N=P(O)OPh-Gruppe repräsentiert, Y¹ eine -P(OPh)₄-Gruppe oder eine -P(O)(OPh)₂-Gruppe repräsentiert, Ph eine Phenylgruppe repräsentiert, n eine Ganzzahl von 3 bis 10000 repräsentiert, R₁ und R₂ gleich oder verschieden sind und unabhängig ein Wasserstoff, ein Hydroxyl, ein C₇₋₃₀-Aryl, ein C₁₋₁₂-Alkoxy oder ein C₁₋₁₂-Alkyl sind; oder
wobei die Phosphazenverbindung eine Struktur wie folgt aufweist: 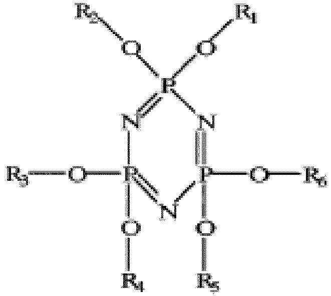 wobei R₁ bis R₆ gleich oder verschieden sein können und eine Arylgruppe, eine Aralkylgruppe, ein C₁₋₁₂-Alkoxy, ein C₁₋₁₂-Alkyl oder eine Kombination davon sein können; oder
wobei die Phosphazenverbindung eine Struktur wie folgt aufweist:

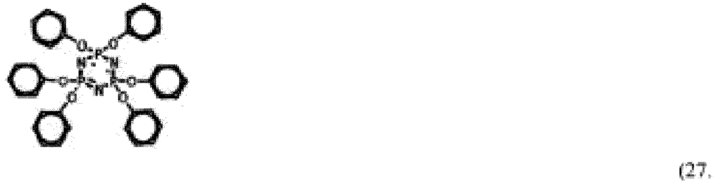

9. Flammhemmende Polycarbonatzusammensetzung nach einem der Ansprüche 1 bis 7, wobei die Phosphazenverbindung Hexaphenoxycyclotriphosphazen, Octaphenoxycyclotetraphosphazen, Decaphenoxycyclopentaphosphazen oder eine Kombination ist, die wenigstens eine der oben genannten Phosphazenverbindungen umfasst.

10. Flammhemmende Polycarbonatzusammensetzung nach einem der Ansprüche 1 bis 7, wobei die Phosphazenverbindung ein quervernetztes Phenoxyphosphazen ist.

11. Flammhemmende Polycarbonatzusammensetzung nach einem der Ansprüche 1 bis 10, wobei die Glasfaser eine flache Glasfaser, rundes Glas, rechteckiges Glas, Glas mit einem unregelmäßigen Querschnitt, langes Filament oder zerbrochenes Glas ist.

12. Flammhemmende Polycarbonatzusammensetzung nach Anspruch 5, wobei der flammhemmende Synergist Talk ist.

13. Flammhemmende Polycarbonatzusammensetzung nach einem der Ansprüche 1 bis 12, die eine Flammhemmung von V-0, V-1, V-2 oder 5VA bei einer Probendicke von 0,6 bis 3,0 Millimetern, wenn per einem UL-94-Protokoll getestet aufweist; und eine Schmelzvolumenrate von 6 bis 60 Kubikzentimeter pro 10 Minuten aufweist, wenn per ASTM D1238 bei einer Temperatur von 300 °C und einer Kraft von 2,16 Kilogramm gemessen.

14. Produkt, hergestellt aus der Zusammensetzung nach einem der Ansprüche 1 bis 13.

15. Verfahren, umfassend:
Vermischen von 10 bis 90 Gewichtsprozent einer Polycarbonatzusammensetzung, die Wiederholungseinheiten umfasst, die von Sebacinsäure und Bisphenol A abgeleitet sind; 5 bis 60 Gewichtsprozent eines Verstärkerfüllstoffs; wobei der Verstärkerfüllstoff eine Glasfaser, eine Kohlefaser, eine Metallfaser oder eine Kombination ist, die wenigstens einen der oben genannten Verstärkerfüllstoffe umfasst; und eine flammhemmende Zusammensetzung, die eine Phosphazenverbindung und einen flammhemmenden Synergist umfasst, wobei der flammhemmende Synergist ein Mineralfüllstoff ist und wobei der Mineralfüllstoff Talk, Calciumcarbonat, Dolomit, Wollastonit, Bariumsulfat, Siliciumdioxid, Kaolin, Feldspat oder eine Kombination ist, umfassend wenigstens einen der oben genannten Mineralfüllstoffen; wobei die flammhemmende Zusammensetzung effektiv ist, um der flammhemmende Polycarbonatzusammensetzung eine Wahrscheinlichkeit eines ersten Durchlaufs von 0,10 bis 0,199 pro Einheitsgewicht der flammhemmenden Zusammensetzung bei einer Probendicke von wenigstens 1,2 Millimetern zu liefern, wenn per dem UL-94-Protokoll getestet;
Extrudieren der flammhemmenden Zusammensetzung; und
optional Formen der Zusammensetzung.

## Revendications

1. Composition de polycarbonate ignifuge comprenant :
10 à 90 pour cent en poids d'une composition de polycarbonate qui comprend un polycarbonate ;
5 à 60 pour cent en poids d'une charge renforçante ; où la charge renforçante est une fibre de verre, une fibre de carbone, une fibre métallique, ou une combinaison comprenant au moins l'une des charges renforçantes précédentes ;
un composé de phosphazène ; et
un agent synergique ignifuge, où l'agent synergique ignifuge est une charge minérale, où la charge minérale est le talc, le carbonate de calcium, la dolomie, la wollastonite, le sulfate de baryum, la silice, le kaolin, le feldspath, ou une combinaison comprenant au moins l'une des charges minérales précédentes

2. Composition de polycarbonate ignifuge de la revendication 1, dans laquelle le polycarbonate comprend un homopolymère de polycarbonate linéaire, un homopolymère de polycarbonate ramifié, ou une combinaison d'un homopolymère de polycarbonate linéaire et d'un homopolymère de polycarbonate ramifié ; et où le polycarbonate est présent en une quantité allant de 40 à 80 pour cent en poids, par rapport au poids total de la composition de polycarbonate ignifuge.

3. Composition de polycarbonate ignifuge de l'une quelconque des revendications 1 et 2, dans laquelle la composition de polycarbonate comprend un copolymère de copolyester-carbonate qui comprend un polyester ayant des motifs de répétition dérivés de l'acide sébacique et d'un composé dihydroxy.

4. Composition de polycarbonate ignifuge de l'une quelconque des revendications 1 à 3, dans laquelle la composition de polycarbonate comprend en outre un copolymère de polysiloxane-carbonate qui comprend 15 à 25 pour cent en poids de polysiloxane.

5. Composition de polycarbonate ignifuge de l'une quelconque des revendications 1 à 4, dans laquelle la composition ignifuge comprend 2 à 20 pour cent en poids du composé de phosphazène et 0,5 à 10 pour cent en poids de l'agent synergique ignifuge.

6. Composition de polycarbonate ignifuge de la revendication 3, dans laquelle le copolymère de copolyester-carbonate comprend un premier copolymère de copolyester-carbonate qui comprend un polyester qui est copolymerisé avec un polycarbonate, où le polyester est dérivé d'une réaction entre l'acide sébacique et le bisphénol A et le polycarbonate est dérivé d'une réaction entre le bisphénol A et le phosgène ; et où le premier copolymère de copolyester-carbonate comprend 3 à 15 pour cent en mole d'un polyester dérivé de l'acide sébacique ; et où le premier copolymère de copolyester-carbonate a un poids moléculaire moyen en poids allant de 15000 à 25000 Daltons.

7. Composition de polycarbonate ignifuge de la revendication 6, comprenant en outre un deuxième copolymère de copolyester-carbonate qui est coiffé aux extrémités par le para-cumylphénol et comprend 7 à 12 pour cent en mole d'un polyester dérivé de l'acide sébacique ; et où le deuxième copolymère de copolyester-carbonate a un poids moléculaire moyen en poids allant de 30000 à 45000 Daltons.

8. Composition de polycarbonate ignifuge de l'une quelconque des revendications 1 à 7, dans laquelle le composé de phosphazène a la structure : 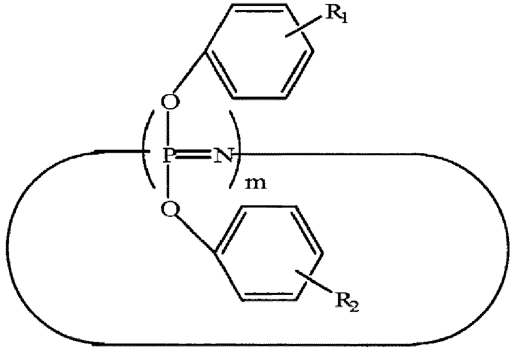 où m représente un nombre entier allant de 3 à 25, R₁ et R₂ sont identiques ou différents et représentent indépendamment un atome d'hydrogène, un hydroxyle, un groupe aryle en C₇ à C₃₀, un alcoxy en C₁ à C₁₂, ou un alkyle en C₁ à C₁₂ ; ou
où le composé de phosphazène a la structure : 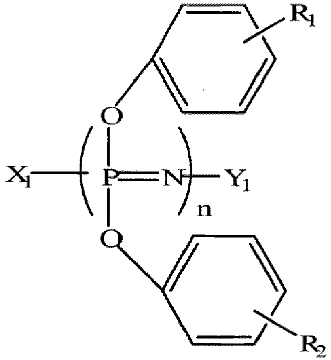 où X¹ représente un groupe -N=P(OPh)₃ ou un groupe -N=P(O)OPh, Y¹ représente un groupe -P(OPh)₄ ou un groupe -P(O)(OPh)₂, Ph représente un groupe phényle, n représente un nombre entier allant de 3 à 10000, R₁ et R₂ sont identiques ou différents et représentent indépendamment un atome d'hydrogène, un hydroxyle, un aryle en C₇ à C₃₀, un alcoxy en C₁ à C₁₂, ou un alkyle en C₁ à C₁₂, ou
où le composé de phosphazène a une structure : 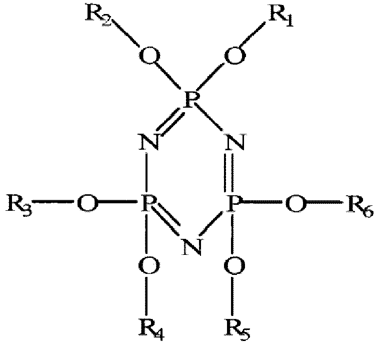 où R₁ à R₆ peuvent être identiques ou différents et peuvent représenter un groupe aryle, un groupe aralkyle, un alcoxy en C₁ à C₁₂, un alkyle en C₁ à C₁₂, ou une combinaison de ceux-ci ; ou
où le composé de phosphazène a une structure :

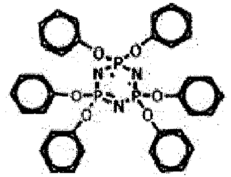

9. Composition de polycarbonate ignifuge de l'une quelconque des revendications 1 à 7, dans laquelle le composé de phosphazène est l'hexaphénoxy cyclotriphosphazène, l'octaphénoxy cyclotétraphosphazène, le décaphénoxy cyclopentaphosphazène, ou une combinaison comprenant au moins l'un des composés de phosphazène précédents.

10. Composition de polycarbonate ignifuge de l'une quelconque des revendications 1 à 7, dans laquelle le composé de phosphazène est un phénoxyphosphazène réticulé.

11. Composition de polycarbonate ignifuge de l'une quelconque des revendications 1 à 10, dans laquelle la fibre de verre est une fibre de verre plat, de verre rond, de verre rectangulaire, de verre ayant une section transversale irrégulière, de verre coupé ou à filament long.

12. Composition de polycarbonate ignifuge de la revendication 5, dans laquelle l'agent synergique ignifuge est le talc.

13. Composition de polycarbonate ignifuge de l'une quelconque des revendications 1 à 12, présentant une ininflammabilité de V-0, V-1, V-2, ou 5VA à une épaisseur d'échantillon allant de 0,6 à 3,0 millimètres lorsqu'elle est testée selon le protocole UL-94 ; et un indice de fluidité en volume allant de 5 à 60 centimètres cubes par 10 minutes lorsqu'il est mesuré selon la norme ASTM D1238 à une température de 300°C et une force de 2,16 kilogrammes.

14. Article fabriqué à partir de la composition de l'une quelconque des revendications 1 à 13.

15. Procédé comprenant le fait :
de mélanger 10 à 90 pour cent en poids d'une composition de polycarbonate qui comprend des motifs de répétition dérivés de l'acide sébacique et du bisphénol A ; 5 à 60 pour cent en poids d'une charge renforçante ; où la charge renforçante est une fibre de verre, une fibre de carbone, une fibre métallique, ou une combinaison comprenant au moins l'une des charges renforçantes précédentes ; et une composition ignifuge qui comprend un composé de phosphazène et un agent synergique ignifuge, où l'agent synergique ignifuge est une charge minérale et où la charge minérale est le talc, le carbonate de calcium, la dolomie, la wollastonite, le sulfate de baryum, la silice, le kaolin, le feldspath, ou une combinaison comprenant au moins l'une des charges minérales précédentes ; où la composition ignifuge permet d'offrir à la composition de polycarbonate ignifuge une probabilité de réussite dès le premier essai de 0,10 à 0,199 par poids unitaire de la composition ignifuge à une épaisseur d'échantillon d'au moins 1,2 millimètres lorsqu'elle est testée selon le protocole UL-94 ;
d'extruder la composition ignifuge ; et
de mouler, facultativement, la composition.
